# EUROPEAN PATENT SPECIFICATION

(11) **EP 3 272 552 B1**
(45) Date of publication and mention of the grant of the patent: **13.11.2019**
(21) Application number: 16765007.6
(22) Date of filing: 16.03.2016
(51) Int. Cl.: B60C 11/00, B60C 11/13, B60C 11/12, B60C 11/03

(54) **TIRE**
REIFEN
PNEUMATIQUE

(30) Priority: 19.03.2015 JP 2015055752; 10.07.2015 JP 2015138538
(43) Date of publication of application: 24.01.2018
(73) Proprietor: Bridgestone Corporation, Tokyo 104-8340 (JP)
(72) Inventor: YAMAGUCHI, Masashi, Tokyo 104-8340 (JP)
(74) Representative: Oxley, Robin John George
(86) International application number: PCT/JP2016/058285
(87) International publication number: WO 2016/148178

(56) References cited:
- EP-A1- 1 580 032
- EP-A2- 0 847 878
- WO-A1-2008/029563
- WO-A1-2014/142346
- WO-A1-2014/142350
- JP-A- 2007 191 093
- JP-A- 2007 230 399
- JP-A- 2009 179 219
- JP-A- 2012 179 948
- JP-A- 2014 084 109
- US-A1- 2010 084 062

## Description

### Technical Field

The present invention relates to a tire, and in particular, relates to a tire suitable for mounting on large vehicles, particularly construction vehicles.

### Background Art

A pneumatic tire used for large vehicles such as a vehicle construction machine has a thickness of a tread section larger than that of other vehicles. Thus, there arises a problem that the temperature of the tread section, particularly in a deep portion thereof, of a tire heated accompanying work or running of a large vehicle is hard to bring down by natural heat dissipation in the atmosphere.

To solve the problem, previously providing a plurality of air intake grooves of air and air introduction grooves of air communicating with each air intake groove in a tire circumferential direction in a tread section of the tire has been proposed (see Patent Literature 1).

According to the proposal, the air received after being introduced into the air intake groove through the air introduction groove flows in a longitudinal direction inside the air intake groove, and in the meantime, the neighborhood of a groove bottom of the air intake groove, and therefore, the neighborhood of a deep portion of the tread section is cooled.

In reality, however, the air introduced into the air intake groove may flow through a relatively shallow portion below an open surface of the air intake groove, instead of the neighborhood of the groove bottom of the air intake groove, and therefore, the deep portion of the tread section, where the temperature is relatively high, may not be sufficiently cooled.

### Citation List

### Patent Literature

Patent Literature 1: WO 2013-035889.
WO2008/029563-A1 and EP0847878-A2 show tires being relevant for the invention with an air intake groove, an air introduction groove and an air-guiding section.

### Summary of Invention

### Technical Problem

The present invention is made in view of the above problem and a subject thereof is to provide a tire capable of sufficiently cooling a deep portion of a tread section by efficiently fluidizing the air in the deep portion of the tread section or the neighborhood thereof.

### Solution to Problem

A tire according to first aspect of the present invention includes at least one air intake groove provided in a tire tread section, extending in a direction intersecting a tire circumferential direction, and having a groove width smaller than a groove depth; an air introduction groove opening to a tread surface side and communicating with the air intake groove to introduce an air on the tread surface side into the air intake groove accompanying tire rotation; and an air-guiding section having an air-guiding surface which intersects the air intake groove and which is directed outward in a position intersecting the air intake groove with respect to a center position in a groove longitudinal direction of the air intake groove, the air-guiding surface guiding an air introduced into the air intake groove by the air introduction groove to a groove bottom side of the air intake groove, wherein the air introduction groove is made of an inclined surface inclined from the tread surface toward the inner side in a tire radial direction, the inclination angle of the inclined surface of the air introduction grooves, with respect to the tread surface is 45° or less. The air introduction groove communicates with a groove wall surface on one side of groove wall surfaces opposite to each other in the tire circumferential direction of the air intake groove. The air-guiding section communicates with the air intake groove, communicates with the groove wall surface on the other side of the groove wall surfaces opposite to each other in the tire radial direction of the air intake groove, has an outer side end in the tire circumferential direction on an outer side in a tire radial direction from a radial direction position where the air introduction groove and the air intake groove intersect, and has an inner side end in the tire radial direction on an inner side in the tire radial direction from a position half a groove depth of the air intake groove, wherein the air-guiding section comprises includes an air-guiding groove partially opposed to the air introduction groove at least in the tire circumferential direction.

In a tire according to second aspect of the present invention, the air-guiding section protrudes in a groove width direction of the air intake groove by being arranged on the groove wall of the air intake groove and includes an air-guiding protrusion extending in the tire radial direction toward the groove bottom. The air-guiding protrusion guides an air guided into the air intake groove by the air introduction groove accompanying the tire rotation to the groove bottom side of the air intake groove.

### Advantageous Effects of Invention

The present invention provides a tire capable of sufficiently cooling a deep portion of a tread section by efficiently fluidizing the air in the deep portion of the tread section or the neighborhood thereof.

### Brief Description of Drawings

Fig. 1 is a schematic view showing a portion of a tread of a tire according to a first embodiment in a state expanded on a flat surface.
Fig. 2 is a perspective view showing an air intake groove of air opening to a tread of the tire according to the first embodiment, a set of an air introduction groove and an air-guiding groove communicating with the air intake groove, and another set of another air introduction groove and another air-guiding groove.
Fig. 3 is a sectional view obtained along a line III-III in Fig. 1.
Fig. 4 is a schematic perspective view showing a modification of the air-guiding groove according to the first embodiment.
Fig. 5 is a schematic partial perspective view showing another modification of the air-guiding groove according to the first embodiment.
Fig. 6 is a graph showing a relationship between an aperture ratio (B/A) as a ratio of a sum (B) of orthographic projection areas of the air-guiding groove and the other air-guiding groove to a sum (A) of orthographic projection areas of the air introduction groove and the other air introduction groove on a tread of the tire according to the first embodiment and a heat transfer coefficient of the air in the air intake groove.
Figs. 7(a) to 7(d) are schematic orthographic drawings showing examples of physical relationships of two sets of the air introduction groove and the air-guiding groove of the tire according to the first embodiment.
Fig. 8 is a schematic partial perspective view showing still another modification of the air-guiding groove according to the first embodiment of the present invention.
Fig. 9 is a schematic view showing a portion of the tread of a tire according to a second embodiment in a state expanded on a flat surface.
Fig. 10 is a partial perspective view of the tread of the tire according to the second embodiment.
Fig. 11 is a sectional view of a line XI-XI in Fig. 9.
Fig. 12 is a sectional view showing a modification along the line XI-XI in Fig. 9.
Fig. 13 is a partial perspective view of the tread of a tire according to a third embodiment.
Fig. 14 is a partial perspective view of the tread of a tire according to a fourth embodiment.
Fig. 15 is a partial perspective view of the tread of a tire according to a fifth embodiment.
Fig. 16 is a graph chart showing calculation results in Analytical calculation example 1.
Fig. 17 is a graph chart showing calculation results in Analytical calculation example 2.
Fig. 18 is a graph chart showing calculation results in embodiment in Analytical calculation example 3.
Fig. 19 is a graph chart showing conventional calculation results in Analytical calculation example 3.

### Description of Embodiments

Hereinafter, the embodiments of the present invention will be described with reference to the appended drawings. In the description of the drawings below, the same or similar reference signs are attached to the same or similar portions. When only a portion of the configuration of each embodiment is described, the configurations of other embodiments described earlier can be applied to the other portions of the configuration.

### (First embodiment)

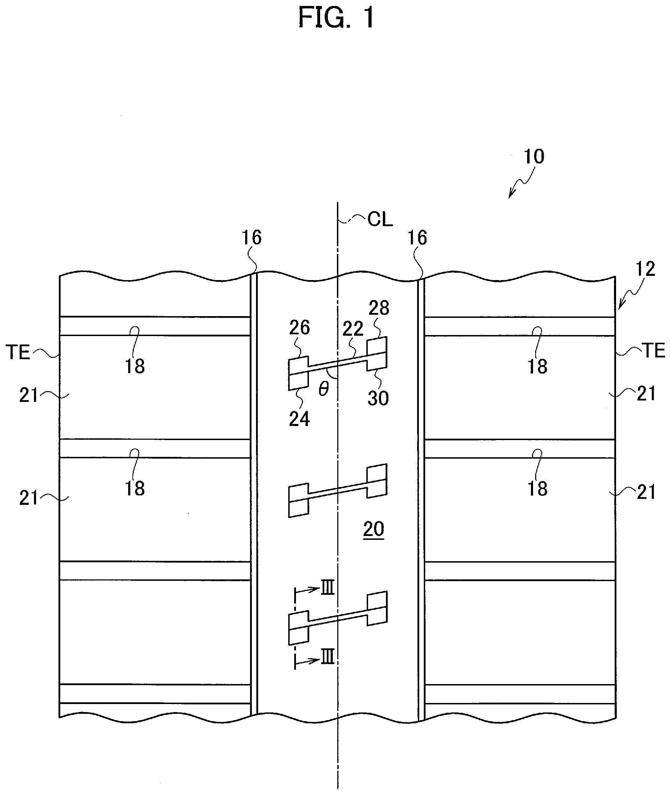

Referring to Fig. 1, a portion of the surface of a tread section 12 of a tire 10 is schematically shown in a state expanded on a flat surface.

Application targets of the tire 10 do not matter, but typically the tire 10 is made of a pneumatic tire used for large vehicles like vehicle construction machines.

The tread section 12 of the tire 10 includes any pattern (tread pattern). The tread pattern shown in Fig. 1 includes a pair of circumferential grooves 16 extending in a tire circumferential direction (an up and down direction in Fig. 1) and a plurality of width direction grooves 18 extending in a tire width direction (a left and right direction in Fig. 1). Both of the circumferential grooves 16 are positioned on both sides of an equatorial plane CL of the tire 10. The plurality of width direction grooves 18 is arranged equidistantly to each other in the tire circumferential direction between each of the circumferential grooves 16 and each tread end TE. One end of each of the width direction grooves 18 communicates with each of the circumferential grooves 16 and the other end thereof ends at each tread end TE.

The tread pattern includes a center land section 20 partitioned by both of the circumferential grooves 16 therebetween and extending in the tire circumferential direction and a block-like land section 21 partitioned by the two width direction grooves 18 adjacent to each other therebetween in the tire circumferential direction. The surface of the center land section 20 and that of the block-like land section 21 each define practically the tread of the tire 10.

The tread pattern of the tread section 12 may be made of what is called a lib pattern, a lug pattern, or a block pattern. The width direction grooves 18 may, for example, extend in a direction intersecting the width direction or have mutually different width dimensions.

The tire 10 includes at least one, in the illustrated example, a plurality of air intake grooves 22 provided in the tread section 12 to release heat generated in the tread section 12 accompanying work or running of the vehicle mounted therewith and opening to the surface of the center land section 20 defining the tread, a set of an air introduction groove 24 and an air-guiding groove (air-guiding section) 26 communicating with each of the air intake grooves 22, and another set of another air introduction groove 28 and another air-guiding groove (air-guiding section) 30. Instead of the illustrated example, these grooves 22 to 30 may be provided in each of the block-like land sections 21.

The air introduction grooves 24, 28 are each provided so as to be positioned forward and backward in one direction when the tire 10 rotates in the one direction for work or running of the vehicle. The air introduction groove 24 serves to introduce the air (atmosphere) flowing into the air introduction groove 24 when the tire 10 rotates in the one direction into the air intake groove 22, the air intake groove 22 serves to receive the air introduced thereinto, and the air-guiding groove 26 serves to guide the air introduced into the air intake groove 22 toward the groove bottom of the air intake groove 22. At this point, the other air introduction groove 28 serves as an outflow path of the air after the inside of the air intake groove 22 being fluidized.

Similarly, the other air introduction groove 28 serves to introduce the air flowing into the other air introduction groove 28 when the tire 10 rotates in the opposite direction into the air intake groove 22 and the air-guiding groove 30 serves to guide the air introduced into the air intake groove 22 toward the groove bottom of the air intake groove 22. At this point, the air introduction groove 24 serves as an outflow path of the air after the inside of the air intake groove 22 being fluidized. Here, the air fluidized inside the air intake groove 22 serves to deprive the tread section 12 of heat during fluidization.

The plurality of air intake grooves 22 each opens to the surface of the center land section 20 (tread of the tire 10) constituting the tread section 12. In the illustrated example, the plurality of air intake grooves 22 is arranged equidistantly to each other in the tire circumferential direction in parallel with each other. Instead, the plurality of air intake grooves 22 may be arranged at mutually different intervals or to be non-parallel to each other.

The air intake groove 22 extends in a direction intersecting the tire circumferential direction. That is, the air intake groove 22 extends non-parallel thereto. An intersection angle θ is set so as to be in a range of 0° < θ ≤ 90°, preferably 0° < θ ≤ 60°. The air intake groove 22 illustrated has one end and the other end in a longitudinal direction thereof within the center land section 20. The air intake groove 22 extends within the center land section 20 and also terminates within the center land section 20. Both or one of both ends in the longitudinal direction of the air intake groove 22 may communicate with both or one of both of the circumferential grooves 16, but in consideration of degradation of rigidity of the center land section 20, it is desirable, as in the illustrated example, to be non-communicating.

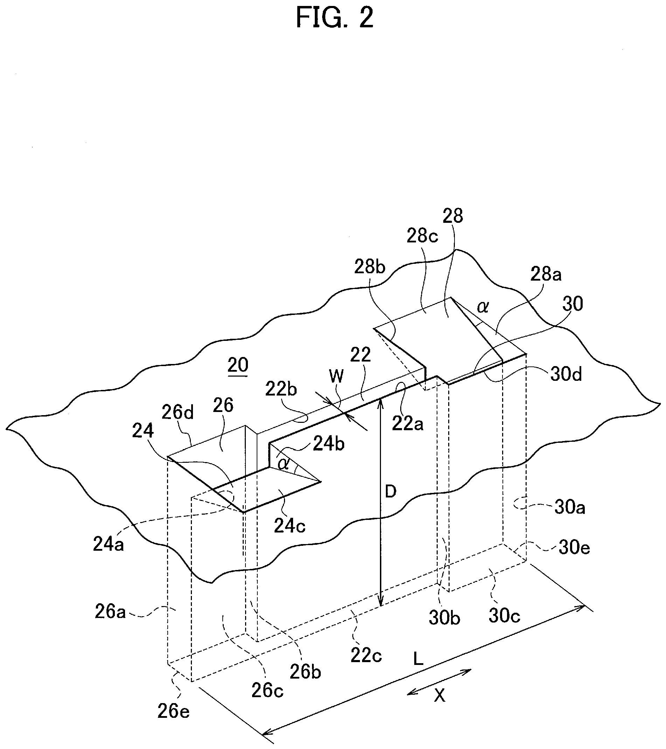

As shown in Fig. 2, each of the air intake grooves 22 has a U-shaped cross-sectional shape and includes groove wall surfaces 22a, 22b defining the cross-sectional shape and made of a pair of flat surfaces opposite to each other and a groove bottom 22c linked to both of the groove wall surfaces 22a, 22b and made of a flat surface. Instead of the illustrated example, the air intake groove 22 may have, for example, a V-shaped cross-sectional shape. In an air intake groove having the V-shaped cross-sectional shape, each of a pair of groove wall surfaces opposite to each other is made of a flat surface and the groove bottom is made of an intersection portion of both groove wall surfaces and forms a linear line.

A groove width W and a groove depth D (see Fig. 2) of each of the air intake grooves 22 are set such that the relation W < D is satisfied to limit the degradation of rigidity of the tread section 12, more specifically the degradation of rigidity of the center land section 20 caused by the air intake groove 22 being provided. As an example, the air intake groove 22 has the intersection angle θ = 30°, the groove width W = 10 mm, the groove depth D = 100 mm, and a length L (see Fig. 2) = 200 mm in the longitudinal direction thereof.

A set of the air introduction groove 24 and the air-guiding groove 26 of two sets of the air introduction grooves and air-guiding grooves, and another set of the other air introduction groove 28 and the other air-guiding groove 30 are arranged by leaving a space to each other in the longitudinal direction of the air intake groove and arranged, in the example illustrated in Fig. 2, at both ends in the longitudinal direction of the air intake groove 22. Instead, only one of the two sets (for example, the one set of the air introduction groove 24 and the air-guiding groove 26) may be provided at one of both ends of the air intake groove 22. Alternatively, only one of the two sets (for example, the one set of the air introduction groove 24 and the air-guiding groove 26) may be provided at one end of the air intake groove 22 and only the air introduction groove 28 may be provided at the other end of the air intake groove 22.

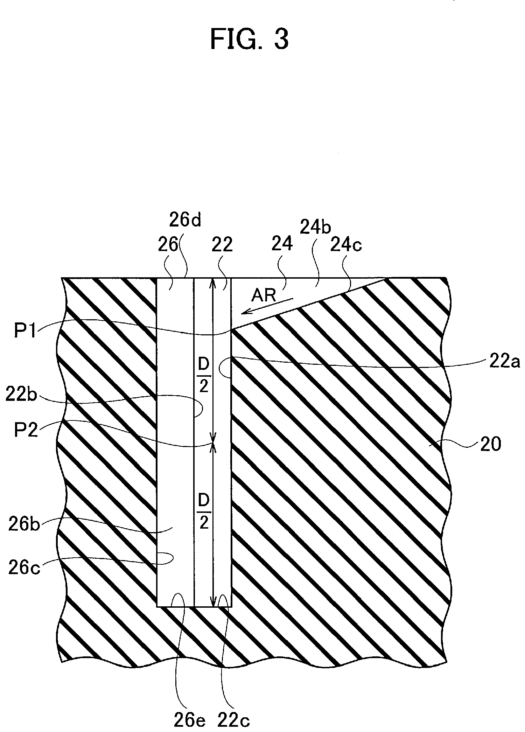

As shown in Figs. 2 and 3, the air introduction grooves 24, 28 each open to the surface (tread) of the center land section 20. Accordingly, the air can be taken into the air introduction grooves 24, 28 from around the tire 10. The air introduction grooves 24, 28 each extend in any direction, preferably in the tire circumferential direction. Accordingly, the flow of air into the air introduction grooves 24, 28 can be smoothed. Further, the air introduction grooves 24, 28 each communicate with the air intake groove 22 to open to the air intake groove on the one 22a and the other 22b of both of the groove wall surfaces 22a, 22b defining the groove width W (Fig. 2) of the air intake groove 22. This enables the intake of the air when the tire 10 rotates in the one direction or the opposite direction and the introduction of the air into the air intake groove 22.

One air introduction groove 24 has a U-shaped cross-sectional shape and includes groove wall surfaces 24a, 24b defining the cross-sectional shape and made of a pair of flat surfaces opposite to each other and a groove bottom 24c linked to both of these groove wall surfaces and made of a flat surface and the groove bottom 24c intersects one groove wall surface 22a of the air intake groove 22. The other air introduction groove 28 also has, as with the air introduction groove 24, a U-shaped cross-sectional shape and includes groove wall surfaces 28a, 28b defining the cross-sectional shape and made of a pair of flat surfaces opposite to each other and a groove bottom 28c linked to both of these groove wall surfaces 28a, 28b and made of a flat surface and the groove bottom 28c intersects the other groove wall surface 22b of the air intake groove 22. Instead of the illustrated example, each of the air introduction grooves 24, 28 may have, for example, a V-shaped cross-sectional shape. In each air introduction groove having the V-shaped cross-sectional shape, each of a pair of groove wall surfaces opposite to each other is made of a flat surface and the groove bottom is made of an intersection portion of both groove wall surfaces and forms a linear line.

The groove bottom 24c of the air introduction groove 24 and the groove bottom 28c of the air introduction groove 28 are each made of an inclined surface inclined from the surface (tread) of the center land section 20 toward the inner side in a tire radial direction. Thus, the depth of groove gradually increases toward the air intake groove 22 and both of the groove wall surfaces 24a, 24b and both of the groove wall surfaces 28a, 28b form a right-angled triangular shape. By adopting the inclined surface, a driving force larger than when forced toward the groove bottom of the air intake groove 22 can be given to the air ranging from the air introduction groove 24 to the air-guiding groove 26.

The inclination angle of the inclined surface of the air introduction grooves 24, 28, that is, the inclination angle α (Fig. 2) with respect to the surface (tread) of the center land section 20 of the groove bottom 24c, 28c is 45° or less, preferably in the range of 20° to 30°. This is because while the flow rate of the air from the air introduction grooves 24, 28 to the air intake groove 22 increases with an increasing inclination angle α, if the inclination angle α exceeds 45°, the flow of the air separates more easily from the groove bottoms 24c, 28c near the air intake groove 22, leading to a decreased flow rate of the air.

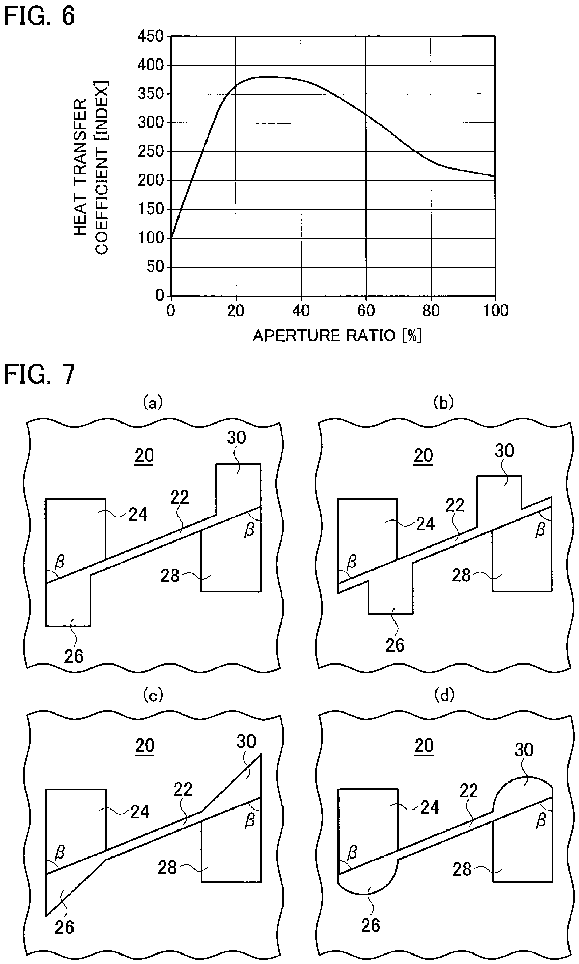

The air-guiding groove 26 has a U-shaped cross-sectional shape and includes groove wall surfaces 26a, 26b defining the cross-sectional shape and made of a pair of flat surfaces opposite to each other and a groove bottom 26c linked to both of the groove wall surfaces and made of a flat surface. Also, the other air-guiding groove 30 has, similarly to the air-guiding groove 26, a U-shaped cross-sectional shape and includes groove wall surfaces 30a, 30b defining the cross-sectional shape and made of a pair of flat surfaces opposite to each other and a groove bottom 30c linked to both of the groove wall surfaces and made of a flat surface. Instead of the illustrated example, each of the air-guiding grooves 26, 30 may have, for example, a V-shaped cross-sectional shape (see Fig. 7(c)). In each air-guiding groove having the V-shaped cross-sectional shape, each of a pair of groove wall surfaces opposite to each other is made of a flat surface and the groove bottom is made of an intersection portion of both groove wall surfaces and forms a straight line.

The air-guiding grooves 26, 30 open to the groove wall surface 22b on the other side in the circumferential direction of the air intake groove 22 and to the groove wall surface 22a on the one side respectively and extend in the tire radial direction. Then, the air-guiding grooves 26, 30 have groove wall surfaces (air-guiding surfaces) 26b, 30b directed outward with respect to the center position in the groove longitudinal direction of the air intake groove 22 in a position of intersection with the other groove wall surface 22b or the one groove wall surface 22a of the air intake groove 22. From the above, the air introduced into the air intake groove 22 has smaller fluid resistance in a position where the air-guiding grooves 26, 30 are formed than when only the air intake groove 22 is formed so that the air can be guided toward the groove bottom 22c of the air intake groove 22. Here, the center position in the groove longitudinal direction of the air intake groove 22 is, for example, a range of ±5% of the length L in the longitudinal direction of the air intake groove 22 from the center in the longitudinal direction of the air intake groove 22.

Referring to Figs. 2 and 3, the air-guiding groove 26 has one end (outer end in figures) 26d and the other end (inner end in figures) 26e in the tire radial direction. The one end 26d and the other end 26e of the air-guiding groove 26 are positioned on the outer side in the tire radial direction from an intersection position PI (Fig. 3) of the groove bottom 24c of the air introduction groove 24 and the one groove wall surface 22a of the air intake groove 22 and on the inner side in the tire radial direction from a position P2 (Fig. 3) half the groove depth of the air intake groove 22 respectively. In the illustrated example, the air-guiding groove 26 has the one end 26d opening to the surface (tread) of the center land section 20 and the other end 26e as deep as the groove bottom 22c of the air intake groove 22.

Similarly, the air-guiding groove 30 has one end (outer end) 30d and the other end (inner end) 30e in the tire radial direction (Fig. 2). The one end 30d and the other end 30e of the air-guiding groove 30 (Fig. 2) are positioned on the outer side in the tire radial direction from the intersection position (PI) of the groove bottom 28c of the air introduction groove 28 and the other groove wall surface 22b of the air intake groove 22 and on the inner side in the tire radial direction from the position (P2) half the groove depth of the air intake groove 22 respectively. In the illustrated example, the air-guiding groove 30 has the one end 30d opening to the surface (tread) of the center land section 20 and the other end 30e as deep as the groove bottom 22c of the air intake groove 22.

By placing the one ends 26d, 30d of the air-guiding grooves 26, 30 on the outer side in the tire radial direction from the position PI, an air AR (Fig. 3) introduced into the air intake groove 22 along the groove bottoms 24c, 28c of the air introduction grooves 24, 28 can be made flowable into the air-guiding grooves 26, 30. By placing the other ends 26e, 30e of the air-guiding grooves 26, 30 on the inner side in the tire radial direction from the position P2, the air AR guided by the air-guiding grooves 26, 30 is released in a position near the groove bottom 22c of the air intake groove 22. Accordingly, the air-guiding grooves 26, 30 can forcibly send the air AR to the groove bottom 22c of the air intake groove 22 or the neighborhood thereof.

The air-guiding grooves 26, 30 are opposed to the air introduction grooves 24, 28 in the tire circumferential direction respectively. In the illustrated example, the air introduction grooves 24, 28 and the air-guiding grooves 26, 30 have the same groove width in a longitudinal direction X (Fig. 2) of the air intake groove 22 and are opposed to each other in the entire groove width. However, the present embodiment is not limited to such an example and the air introduction grooves 24, 28 and the air-guiding grooves 26, 30 only need to be at least partially opposed or overlapped regarding the longitudinal direction X of the air intake groove 22 (see Figs. 7(a), 7(b)). Accordingly, the air AR from the air introduction grooves 24, 28 can reach inside the air-guiding grooves 26, 30 by crossing the air intake groove 22.

Based on what was described above, the air AR can be fluidized in the longitudinal direction X above the groove bottom 22c or in the neighborhood thereof inside the air intake groove 22 and this contributes to cooling of a deep portion of the tread section 12 and lowering of the temperature in the deep portion accompanying the cooling.

Referring to Figs. 7(a) to 7(d) in which the center land section 20 of a tire is partially projected, in the example of Fig. 7(a), the air introduction grooves 24, 28 have a groove width larger than that of the air-guiding grooves 26, 30 and thus, the air introduction grooves 24, 28 and the air-guiding grooves 26, 30 are partially opposed in relation to the longitudinal direction X (Fig. 2) of the air intake groove 22. In the example of Fig. 7(b), in addition to the air introduction grooves 24, 28 having a groove width larger than that of the air-guiding grooves 26, 30, the air-guiding grooves 26, 30 are arranged in a position spaced from one end to the other end of the air intake groove 22 in an longitudinal direction X and in a position spaced from the other end to one end respectively. Thus, the air introduction grooves 24, 28 and the air-guiding grooves 26, 30 are partially opposed in relation to the longitudinal direction X. In the examples illustrated in Figs. 7(c) and 7(d), the air introduction grooves 24, 28 and the air-guiding grooves 26, 30 have the same groove width in relation to the longitudinal direction X of the air intake groove 22 and are opposed in the entire groove width.

As shown in Figs. 7(a) to 7(d), the shape of an open surface on the surface (tread) of the center land section 20 of the air introduction grooves 24, 28 and a plane shape of the one ends 26d, 30d (see Fig. 1) of the air-guiding grooves 26, 30, that is, the shape of the open surface on the surface (tread) of the center land section 20 may be any shape different from the rectangular shape shown in the above example. In Figs. 7(a) to 7(d), the shape of the open surface of the air introduction grooves 24, 28 is trapezoidal. The shape of the open surface of the air-guiding grooves 26, 30 is trapezoidal (Figs. 7(a) and 7(b)), triangular (Fig. 7(c)), and circular (Fig. 7(d)). In the example shown in Fig. 7(d), both of the groove wall surfaces (26a, 26b), (30a, 30b) and the groove bottom (26c), (30c) of each of the air-guiding grooves 26, 30 constitute a portion of a cylindrical surface as a whole and both of the groove wall surfaces and the groove bottom are made up of three continuous circular surfaces constituting a portion of the cylindrical surface. Regarding each example shown in Figs. 7(a) to 7(d), an intersection angle β of each of the air introduction grooves 24, 28 with respect to the air intake groove 22 forms an acute angle at each of both ends in the longitudinal direction X (Fig. 2) of the air intake groove 22. Instead of forming an acute angle, the intersection angle β may be set to 90 degrees (see Fig. 2) or a chronic angle (see Fig. 1). If the intersection angle β is set to an acute angle, however, compared with a case in which other angles are set, the air flowing through the air introduction grooves 24, 28 is more likely to converge on a location defining the intersection angle β and then, flow toward the groove bottom 22c inside the air intake groove 22.

Further, the groove bottoms 26c, 30c of the air-guiding grooves 26, 30 can be set as described below (see Figs, 4, 5, and 8), instead of the above example (Fig. 2) in which the whole thereof is made of a flat surface extending in the tire radial direction in parallel with the groove wall surface 22a, 22b of the air intake groove 22.

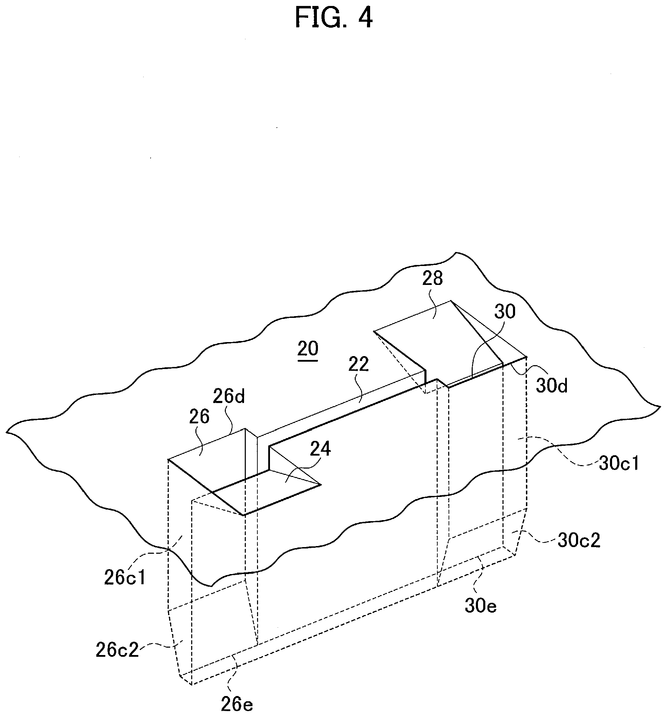

In the example shown in Fig. 4, the groove bottom of the air-guiding grooves 26, 30 is made of flat surfaces 26c1, 30c1 and inclined surfaces 26c2, 30c2. The flat surfaces 26c1, 30c1 extend from the one ends 26d, 30d of the air-guiding grooves 26, 30 to the inner side in the tire radial direction in parallel with the groove wall surfaces 22a, 22b of the air intake groove 22. The inclined surfaces 26c2, 30c2 are linked to the flat surfaces 26c1, 30c1 by forming an angle to reach the other ends 26e, 30e of the air-guiding grooves 26, 30.

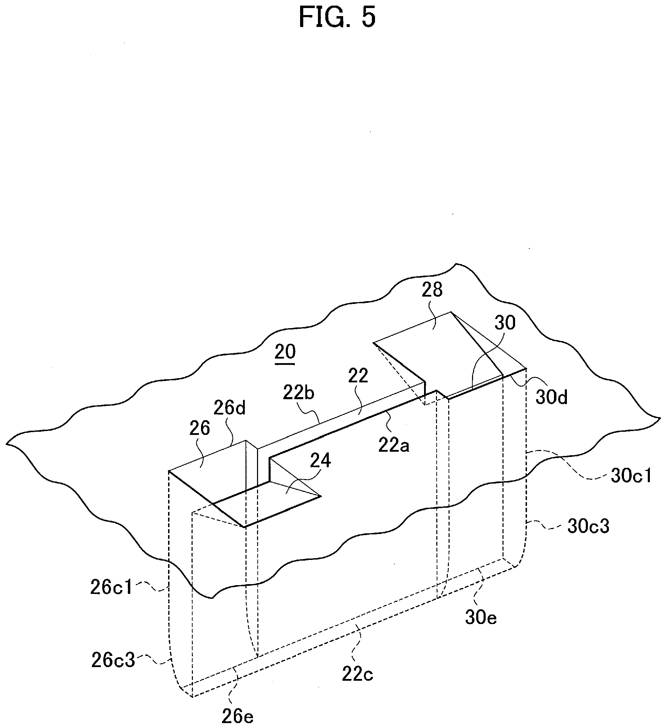

In the example shown in Fig. 5, the inclined surfaces 26c2, 30c2 shown in Fig. 4 are replaced by concave-curved surfaces 26c3, 30c3. The concave-curved surfaces 26c3, 30c3 correspond to the groove wall surfaces 22a, 22b of the air intake groove 22 respectively. According to these examples shown in Figs. 4 and 5, the volume of the air-guiding grooves 26, 30 can be made smaller. Therefore, degradation of rigidity of the center land section 20 by the air-guiding groove being provided can be limited.

Incidentally, in the examples shown in Figs. 2, 4, and 5, as described above, the one ends 26d, 30d of the air-guiding grooves 26, 30 open to the surface (tread) of the center land section 20. This is a factor that degrades rigidity of the tread section 12 and is also a factor that changes the heat transfer coefficient between the tread section 12 and the air AR exerting a cooling effect thereon. From the above, it is important how to set the aperture ratio (B/A) as a ratio of the sum (B) of orthographic projection areas of the air-guiding groove 26 and the other air-guiding groove 30 to the sum (A) of orthographic projection areas of the air introduction groove 24 and the other air introduction groove 28 on the tread of the tire 10.

In Fig. 6, the relationship between the aperture ratio (B/A) obtained from experiments and the heat transfer coefficient is shown by a graph. From the graph, the heat transfer coefficient approximately exhibits the maximum value when the aperture ratio (B/A) is from 30 to 40%. From the above result, the aperture ratio (B/A) is desirably set to 50% or less.

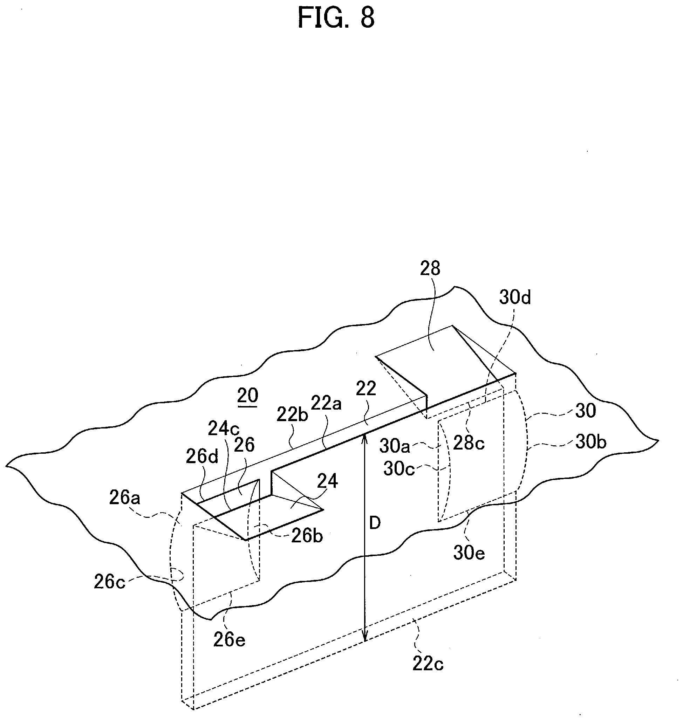

As shown in Fig. 8, the air-guiding grooves 26, 30 may have the groove bottoms 26c, 30c as a concave portion made of a concave-curved surface opposite to the groove wall surfaces 22a, 22b of the air intake groove 22. The air-guiding grooves 26, 30 have both groove wall surfaces 26a, 26b; 30a, 30b linked to the groove bottoms 26c, 30c respectively and the both groove wall surfaces 26a, 26b; 30a, 30b each form a crescent moon shape. The one ends 26d, 30d and the other ends 26e, 30e of the air-guiding grooves 26, 30 are each positioned between the surface (tread) of the center land section 20 and the groove bottom 22c of the air intake groove 22. Also in these guiding grooves 26, 30, the one ends 26d, 30d thereof are positioned on the outer side in the tire radial direction from the intersection position (P1) of the groove bottoms 24c, 28c of the air introduction grooves 24, 28 and the other groove wall surfaces 22b, 22a of the air intake groove 22 and the other ends 26e, 30e are positioned on the inner side in the tire radial direction from the position (P2) half the groove depth of the air intake groove 22.

### (Second embodiment)

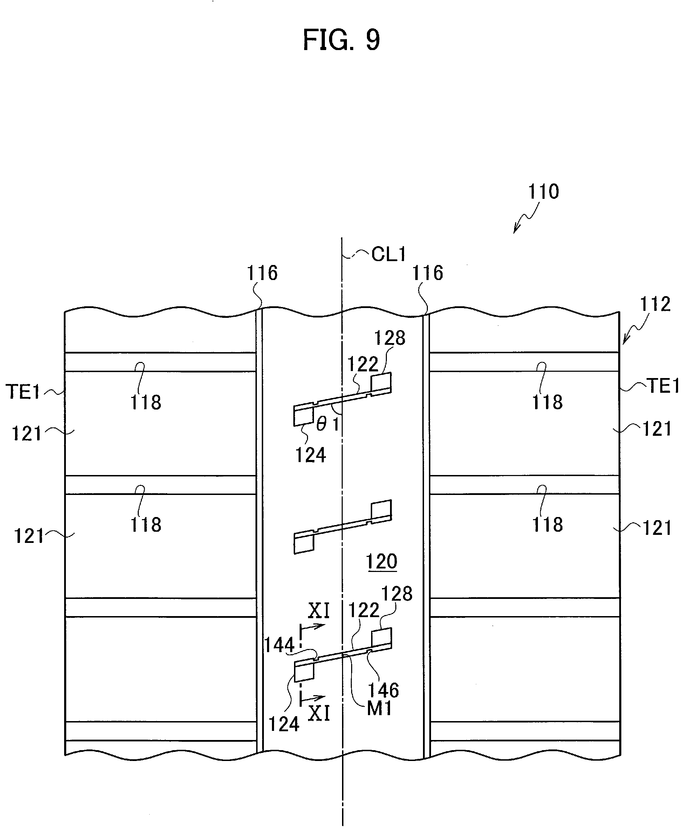

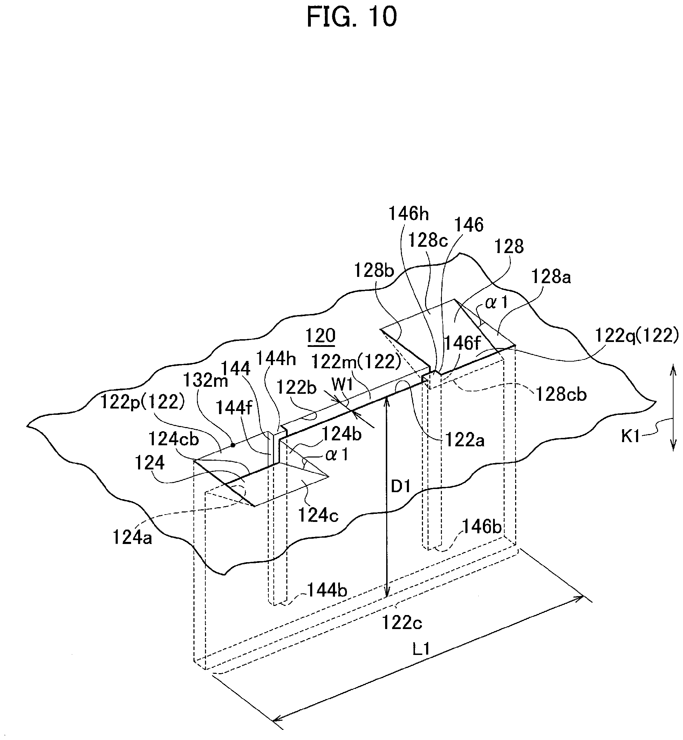

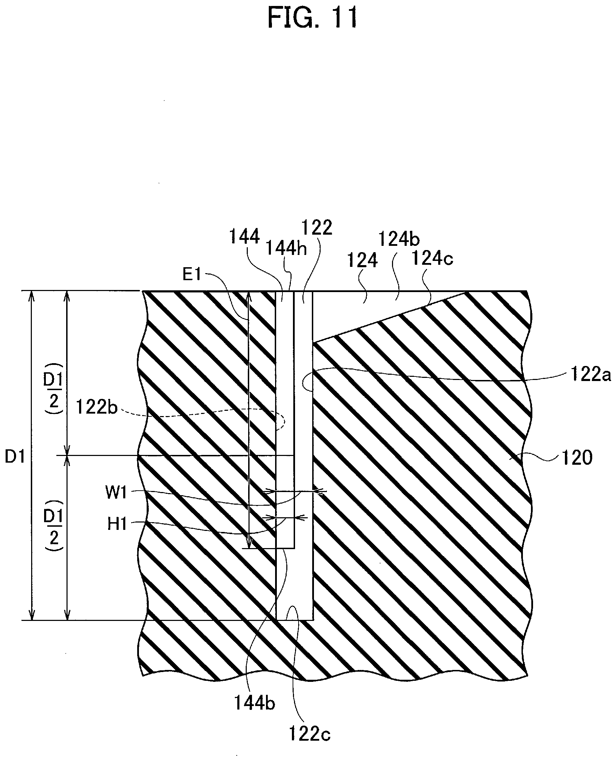

The second embodiment will be described. In Fig. 9, a portion of the surface of a tread section 112 of a tire 110 according to the second embodiment is schematically shown in a state expanded on a flat surface. In Fig. 10, a partial perspective view of the tread of the tire 110 according to the second embodiment is shown. In Fig. 11, a sectional view of a line XI-XI in Fig. 9 is shown.

Application targets of the tire 110 do not matter, but typically the tire 110 is made of a pneumatic tire used for large vehicles like vehicle construction machines.

The tread section 112 of the tire 110 includes arbitrary pattern (tread pattern). The tread pattern shown in Fig. 9 includes a pair of circumferential grooves 116 extending in the tire circumferential direction (an up and down direction in Fig. 9) and a plurality of width direction grooves 118 extending in the tire width direction (a paper left and right direction in Fig. 9). The circumferential grooves 116 are each positioned on both sides of an equatorial plane CL1 of the tire 110. The plurality of width direction grooves 118 is arranged equidistantly to each other in the tire circumferential direction between each of the circumferential grooves 116 and each tread end TE1. One end of each of the width direction grooves 118 communicates with each of the circumferential grooves 116 and the other end thereof ends at each tread end TE1.

The above tread pattern further includes a center land section 120 partitioned by both of the circumferential grooves 116 therebetween and extending in the tire circumferential direction and a block-like land section 121 partitioned by the two width direction grooves 118 adjacent to each other therebetween in the tire circumferential direction. The surface of the center land section 120 and that of the block-like land section 121 each define practically the tread of the tire 110.

The tread pattern of the tread section 112 may be made of what is called a lib pattern, a lug pattern, a block pattern, or the like. The width direction grooves 118 may, for example, extend in a direction intersecting the tire width direction or have mutually different width dimensions.

The tire 110 includes an air intake groove 122 provided in the tread section 112 and opening to the center land section 120 defining the tread to give off heat generated in the tread section 112 accompanying work or running of the vehicle mounted therewith. The air intake groove 122 extends in a direction intersecting the tire circumferential direction in the tread section 112 and has a groove width made smaller than a groove depth.

The tire 110 opens to a tread surface side and communicates with the air intake groove 122, groove bottoms 124c, 128c are inclined so that the groove on the side of the air intake groove 122 becomes deeper, and the tire 110 has air introduction grooves 124, 128 that guide the air on the tread surface side into the air intake groove 122 accompanying the tire rotation on both end sides in the groove longitudinal direction of the air intake groove 122.

Further, the tire 110 includes air-guiding protrusions (air-guiding sections) 144, 146 that protrude in the groove width direction of the air intake groove 122 by being arranged on groove wall surfaces 122b, 122a of the air intake groove 122 and guide the air guided into the air intake groove 122 by the air introduction grooves 124, 128 accompanying the tire rotation to the groove bottom side of the air intake groove 122. The air-guiding protrusions 144, 146 are arranged on both sides in the groove longitudinal direction with respect to the center position in the groove longitudinal direction of the air intake groove in a tread surface view. Then, outer ends in the tire radial direction of the air-guiding protrusions 144, 146 are positioned on the outer side in the tire radial direction from an inner end in the tire radial direction of the air intake groove 122 and inner ends in the tire radial direction of the air-guiding protrusions 144, 146 are positioned on the inner side in the tire radial direction from the position half the groove depth of the air intake groove 122.

With this structure, the air intake groove 122 is constructed of an air intake groove body section 122m positioned on the center side in the groove longitudinal direction from the air-guiding protrusions 144, 146 in the tread surface view, an air intake groove side section 122p communicating with the air introduction groove 124 on the side of the air-guiding protrusion 144 in the tread surface view, and an air intake groove side section 122q communicating with the air introduction groove 128 on the side of the air-guiding protrusion 146.

The air introduction grooves 124, 128 are arranged on both sides in the groove longitudinal direction with respect to the center position in the groove longitudinal direction of the air intake groove in the tread surface view and extend in the tire circumferential direction so as to be in directions opposite to each other. Then, the air introduction grooves 124, 128 have a gradually shallower groove while extending in the tire circumferential direction and the bottom faces (groove bottoms) 124c, 128c of the air introduction grooves 124, 128 are an inclined surface (slope) in a flat surface shape. That is, the bottom face 124c is inclined such that the groove on the side of the air intake groove side section 122p becomes deeper and the bottom face 128c is inclined such that the groove on the side of the air intake groove side section 122q becomes deeper. With this configuration, the air introduction grooves 124, 128 guide the air on the tread surface side to the air intake groove side sections 122p, 122q accompanying the tire rotation respectively.

The air-guiding protrusion 144 is arranged on the borderline between the air intake groove body section 122m and the air intake groove side section 122p and the air-guiding protrusion 146 is arranged on the borderline between the air intake groove body section 122m and the air intake groove side section 122q.

As shown in Figs. 10 and 11, the height of an outer end 144h in the tire radial direction of the air-guiding protrusion 144 is set to a height of an inner end 124cb in the tire radial direction of the bottom face 124c or more and the height of an outer end 146h in the tire radial direction of the air-guiding protrusion 146 is set to a height of an inner end 128cb in the tire radial direction of the bottom face 128c or more. Then, inner ends 144b, 146b in the tire radial direction of the air-guiding protrusions 144, 146 are positioned on the inner side in the tire radial direction from the position half a groove depth D1 (depth position of D1/2) of the air intake groove 122.

The extension direction in the tire circumferential direction of the air introduction grooves 124, 128 is defined as described above, and thus, when the tire 110 rotates in one direction for work or running of the vehicle, the air introduction grooves 124, 128 are provided so as to be positioned forward and backward in the one direction respectively. As a result, the air introduction groove 124 serves to introduce the air (atmosphere) flowing into the air introduction groove 124 into the air intake groove side section 122p when the tire 110 rotates in the one direction. Then, the air-guiding protrusion 144 serves to allow the air flowing into the air introduction groove 124 to efficiently reach a groove bottom portion of the air intake groove body section 122m by the fluid resistance in the groove longitudinal direction from the air intake groove side section 122p to the air intake groove body section 122m being increased by an outward sidewall 144f (air-guiding wall) with respect to the center position in the groove longitudinal direction of the air intake groove 122 in the position where the air-guiding protrusion 144 is formed and serves to inhibit the air flowing into the air intake groove 122 from the air intake groove side section 122p from returning to the air intake groove side section 122p. At this point, the other air introduction groove 128 serves as an outflow path of the air after the inside of the air intake groove 122 being fluidized.

When the tire 110 rotates in the opposite direction, the air introduction groove 128 similarly serves to introduce the air (atmosphere) flowing into the other air introduction groove 128 into the air intake groove side section 122q. Then, the air-guiding protrusion 146 serves to allow the air flowing into the air introduction groove 128 to efficiently reach a groove bottom portion of the air intake groove body section 122m by the fluid resistance in the groove longitudinal direction from the air intake groove side section 122q to the air intake groove body section 122m being increased by an outward sidewall 146f (air-guiding wall) with respect to the center position in the groove longitudinal direction of the air intake groove 122 in the position where the air-guiding protrusion 146 is formed and serves to inhibit the air flowing into the air intake groove 122 from the air intake groove side section 122q from returning to the air intake groove side section 122q. At this point, the air introduction groove 124 serves as an outflow path of the air after the inside of the air intake groove 122 being fluidized. Here, the air fluidized inside the air intake groove 122 (particularly, the air fluidized at the groove bottom) serves to deprive the tread section 112 of heat.

In the second embodiment, as shown in Fig. 9, configuration sections such as the air intake groove 122 are arranged along the tire circumferential direction.

A plurality of air intake grooves 122 each opens to the surface of the center land section 120 (tread of the tire 110) constituting the tread section 112. In the illustrated example, the plurality of air intake grooves 122 is arranged equidistantly to each other in the tire circumferential direction in parallel with each other. Instead, the plurality of air intake grooves 122 may be arranged at mutually different intervals or to be non-parallel to each other.

The air intake groove 122 extends in a direction intersecting the tire circumferential direction. That is, the air intake groove 22 extends non-parallel thereto. An intersection angle θ1 is set so as to be in the range of 0° < θ1 ≤ 90°, preferably 0° < θ1 ≤ 60°. The air intake groove 122 illustrated has one end and the other end in the longitudinal direction thereof within the center land section 120. The air intake groove 122 extends within the center land section 120 and also terminates within the center land section 120. Both or one of both ends in the longitudinal direction of the air intake groove 122 may communicate with both or one of both of the circumferential grooves 116, but in consideration of degradation of rigidity of the center land section 120, it is desirable, like in the illustrated example, to be non-communicating.

As shown in Figs. 10 and 11, each of the air intake grooves 122 has a U-shaped cross-sectional shape and includes groove wall surfaces 122a, 122b made of a pair of flat surfaces opposite to each other and a groove bottom 122c linked to both of the groove wall surfaces 122a, 122b and made of a flat surface.

A groove width W1 and a groove depth D1 (see Fig. 10) of each of the air intake grooves 122 are set such that the relation W1 < D1 is satisfied to limit the degradation of rigidity of the tread section 112, more specifically the degradation of rigidity of the center land section 120 caused by the air intake groove 122 being provided. As an example, the air intake groove 122 has the intersection angle θ1 = 30°, the groove width W1 = 10 mm, the groove depth D1 = 100 mm, and a length L1 (see Fig. 10) = 200 mm in the longitudinal direction thereof.

As shown in Figs. 10 and 11, the air introduction grooves 124, 128 each open to the surface (tread) of the center land section 120. Accordingly, the air can be taken into the air introduction grooves 124, 128 from around the tire 110.

The air introduction groove 124 includes groove wall surfaces 124a, 124b made of a pair of flat surfaces opposite to each other and the bottom face 124c linked to both of the groove wall surfaces 124a, 124b and made of a flat surface. Similarly, the air introduction groove 128 includes groove wall surfaces 128a, 128b made of a pair of flat surfaces opposite to each other and the bottom face 128c linked to both of the groove wall surfaces 128a, 128b and made of a flat surface.

As described above, the bottom face 124c of the air introduction groove 124 is formed from an inclined surface inclined from the surface (tread) of the center land section 120 toward the inner side in the tire radial direction. Thus, the depth of groove gradually increases toward the air intake groove 122 and also both of the groove wall surfaces 124a, 124b form a right-angled triangular shape. The bottom face 124c may extend in a non-inclined state, but by adopting the inclined surface, a driving force larger than when forced toward the groove bottom of the air intake groove 122 can be given to the air flowing into the air intake groove 122 from the air introduction groove 124.

The inclination angle of the inclined surface of the air introduction groove 124, that is, an inclination angle α1 (Fig. 10) with respect to the surface (tread) of the center land section 120 of the bottom face 124c is 45° or less, preferably in the range of 20° to 30°. This is because while the flow rate of the air from the air introduction grooves 124 to the air intake groove 122 increases with an increasing inclination angle α1, if the inclination angle α1 exceeds 45°, the flow of the air separates more easily from the bottom face 124c near the air intake groove 122, leading to a decreased flow rate of the air.

In the second embodiment, the air introduction grooves 124, 128 and the air-guiding protrusions 144, 146 are arranged so as to be point-symmetric on both end sides in the longitudinal direction of the air intake groove 122 in the tread surface view. Therefore, the air introduction groove 128 is configured to be point-symmetric (a shape that fits perfectly after rotation of 180°) about a center M1 (see Fig. 9) of symmetry of the equatorial plane CL1 of the tire with respect to the air intake groove 122, which is configured in the same manner as the air introduction groove 124.

In the second embodiment, as described above, the air having flowed into the air intake groove 122 from the air introduction grooves 124, 128 along the air-guiding protrusion 144 can efficiently be fluidized by the air-guiding protrusion 144 in a deep portion of the tread section 112 or in the neighborhood thereof. Thus, the groove bottom of the air intake groove 122, that is, the deep portion of the tread section 112 is cooled by heat transfer accompanying contact with the air and heat dissipation from the deep portion of the tread section 112 and lowering of the temperature of the deep portion of the tread section 112 can thereby be achieved. Therefore, the tire 110 capable of sufficiently cooling the deep portion of the tread section 112 can be implemented.

A protrusion height H1 (see Fig. 11) of each of the air-guiding protrusions 144, 146 in the groove width direction of the air intake groove 122 is preferably in the range of from 15 to 75% of the groove width W1 of the air intake groove 122. Accordingly, the air can efficiently be caused to flow into the air intake groove body section 122m from the air intake groove side section 122p or the air intake groove side section 122q so that particularly the groove bottom of the air intake groove 122 can be allowed to be efficiently cooled. If lower than 15%, it is difficult for the air having flowed into the air intake groove body section 122m from the air intake groove side section 122p along the air-guiding protrusion 144 to reach a groove bottom portion of the air intake groove body section 122m beyond the air-guiding protrusion 144, and also it is difficult for the air having flowed into the air intake groove body section 122m from the air intake groove side section 122q along the air-guiding protrusion 146 to reach a groove bottom portion of the air intake groove body section 122m beyond the air-guiding protrusion 146 so that the groove bottom 122c cannot be efficiently cooled. If higher than 75%, the fluid resistance between the air flowing into the air intake groove body section 122m from the air intake groove side section 122p along the air-guiding protrusion 144 and the wall surface of the air-guiding protrusion 144 increases and thus, the air having flowed in is more likely to be decelerated before reaching the groove bottom portion of the air intake groove body section 122m and the groove bottom portion of the air intake groove body section 122m cannot be efficiently cooled.

The outer end of the air-guiding protrusion 144 is preferably arranged on the borderline between the air intake groove body section 122m and the air intake groove side section 122p. By arranging the outer end in the above position, compared with a case in which the outer end is arranged to a side of a center position 132m in the groove longitudinal direction of the air intake groove side section 122p, it is easier to efficiently guide the air having been introduced into the air intake groove side section 122p to the groove bottom 122c along the air-guiding protrusion 144. Also, for the same reason, the outer end of the air-guiding protrusion 146 is preferably arranged on the borderline between the air intake groove body section 122m and the air intake groove side section 122q.

In the second embodiment, a depth E1 (see Fig. 11) in the tire radial direction of the air-guiding protrusions 144, 146 is defined by being positioned on the inner side in the tire radial direction from the position half the groove depth D1 of the air intake groove 122 and it is further preferable that the depth E1 be in the range of from 60 to 80% of the groove depth D1 and the air-guiding protrusions 144, 146 do not reach the groove bottom 122c of the air intake groove 122. In Figs. 10 and 11, an example in which the air-guiding protrusions 144, 146 do not reach the groove bottom 122c of the air intake groove 122 is depicted. Accordingly, an air flow at the groove bottom of the air intake groove 122 is reliably prevented from being hindered by the air-guiding protrusions 144, 146. If the depth E1 in the up and down direction of the air-guiding protrusion 144 is longer than 80% of the groove depth D1, the flow of the air flow is hindered by the inner side end in the tire radial direction of the air-guiding protrusion 144 so that a heat dissipation effect may be more likely to be weakened. If the depth E1 in the up and down direction of the air-guiding protrusion 144 is shorter than 60% of the groove depth D1, the air is released to the side of the air intake groove 122 in a position apart from the groove bottom 122c and thus, an air flow parallel to the groove bottom 122c may arise so that a heat dissipation effect may be more likely to be weakened.

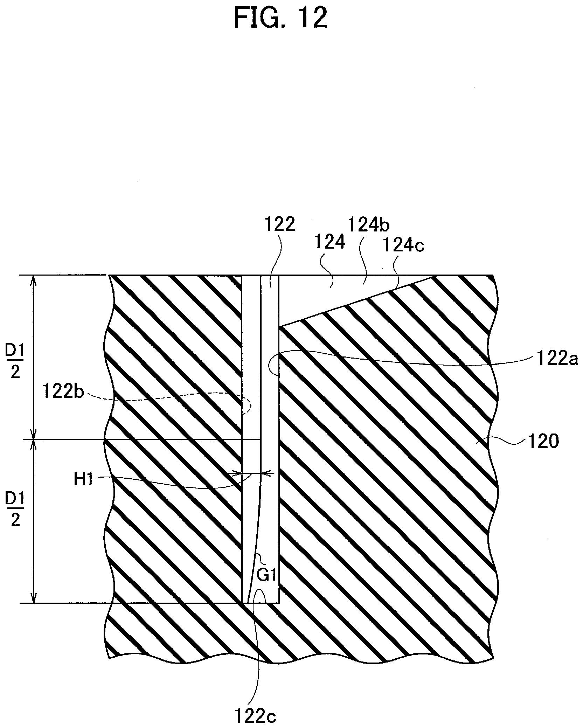

Instead of the air-guiding protrusions 144, 146, as shown in Fig. 12, a low protrusion site G1 whose protrusion height H1 gradually becomes lower toward the inner side in the tire radial direction may be arranged. Accordingly, a tire can be implemented that makes it easy to effectively prevent the air flow at the groove bottom 122c of the air intake groove 122 from being hindered by the low protrusion site G1, while maintaining high strength of the groove wall by the low protrusion site G1.

Components such as grooves and air-guiding protrusions arranged in the center land section 120 may be provided in each of the block-like land sections 121, instead of the center land section 120.

In the second embodiment, an example is taken in which the inflow of air into the air introduction grooves 124, 128 can be smoothed by the extension in the tire circumferential direction of the air introduction grooves 124, 128, but a configuration in which the direction in which the air introduction grooves 124, 128 extend is a different direction from the above direction (for example, a direction intersecting the tire circumferential direction and the tire width direction) may also be adopted.

The air intake groove 122 may have, for example, a V-shaped cross-sectional shape. In an air intake groove having the V-shaped cross-sectional shape, each of a pair of groove wall surfaces opposite to each other is made of a flat surface and the groove bottom is made of an intersection portion of both groove wall surfaces and frequently forms a linear line.

It is also possible to adopt a configuration in which only one of the air introduction grooves 124, 128 is provided at one of both ends of the air intake groove 122.

### (Third embodiment)

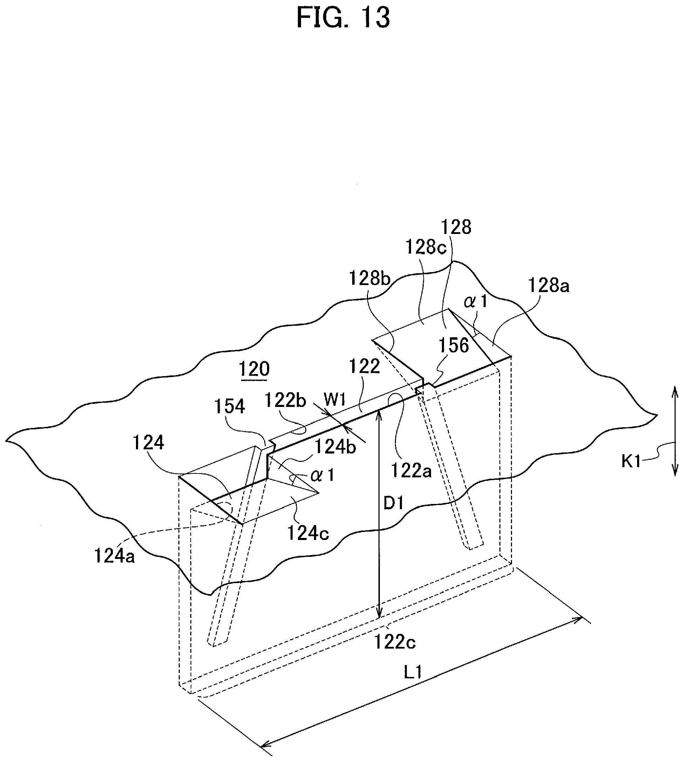

Next, the third embodiment will be described. In Fig. 13, a partial perspective view of the tread of a tire according to the third embodiment is shown.

In the third embodiment, compared with the second embodiment, air-guiding protrusions 154, 156, instead of the air-guiding protrusions 144, 146, that are each inclined with respect to a tire radial direction K1 are arranged so as to be positioned on the outer side in the groove longitudinal direction of the air intake groove 122 in the tread surface view with an increasing groove depth. The air-guiding protrusions 154, 156 are each linear when viewed from the groove wall surface side.

According to the third embodiment, because, compared with the second embodiment, the guide flow path becomes narrower toward the groove bottom, the air having flowed into the groove on the outer side in the groove longitudinal direction from the air-guiding protrusions 154, 156 in the tread surface view can be increased in flow rate toward the groove bottom. Therefore, compared with the second embodiment, heat dissipation can further be increased (compared with the second embodiment, for example, heat dissipation can be increased by a little less than 10%).

### (Fourth embodiment)

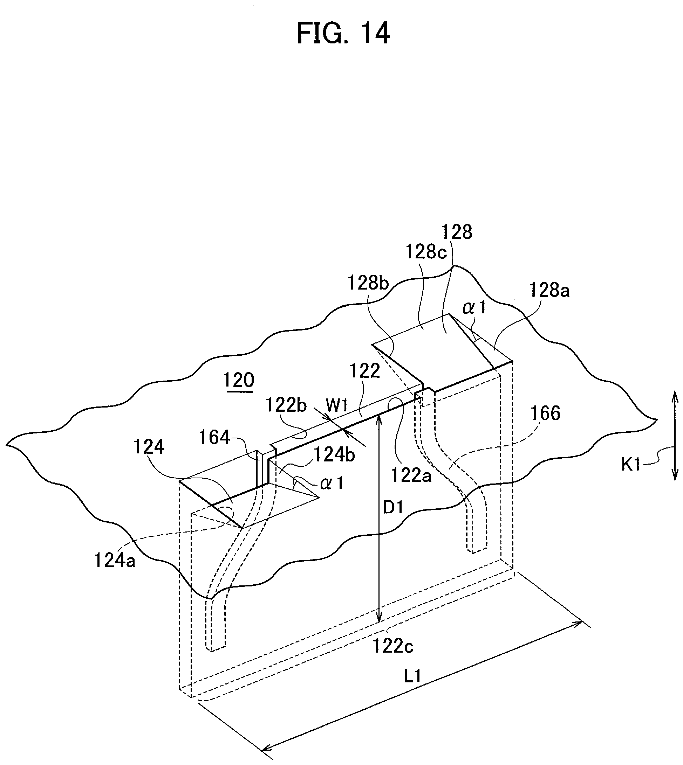

Next, the fourth embodiment will be described. In Fig. 14, a partial perspective view of the tread of a tire according to the fourth embodiment is shown.

In the fourth embodiment, compared with the second embodiment, instead of the air-guiding protrusions 144, 146, air-guiding protrusions 164, 166 that are each inclined with respect to the tire radial direction K1 are arranged so as to be positioned on the outer side in the groove longitudinal direction of the air intake groove 122 in the tread surface view with an increasing groove depth.

In the fourth embodiment, the air-guiding protrusions 164, 166 are curved, compared with the third embodiment, when viewed from the groove wall surface side and accordingly, the air is made easy to flow smoothly up to the inner side end in the tire radial direction (end on the groove bottom side) of the air-guiding protrusions 164, 166.

### (Fifth embodiment)

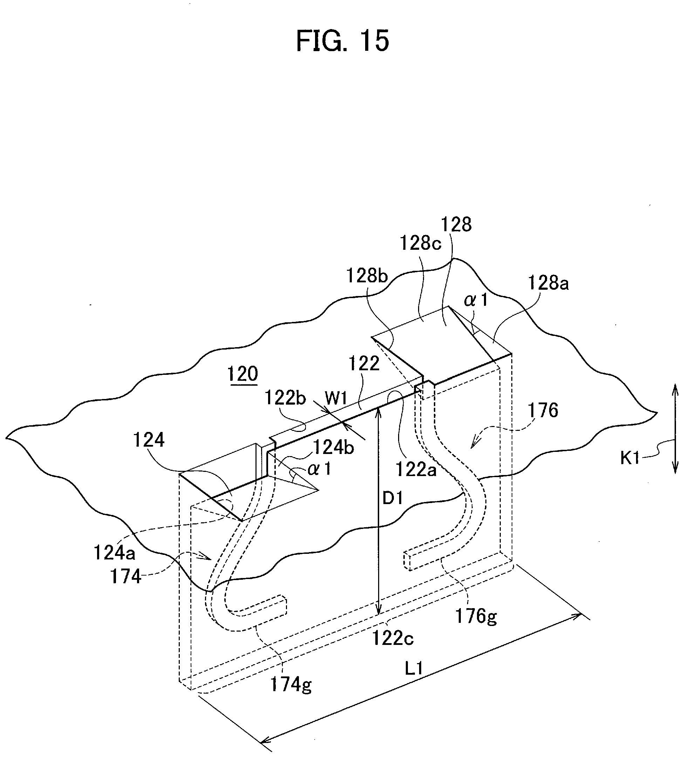

Next, the fifth embodiment will be described. In Fig. 15, a partial perspective view of the tread of a tire according to the fifth embodiment is shown.

In the fifth embodiment, compared with the fourth embodiment, instead of the air-guiding protrusions 164, 166, air-guiding protrusions 174, 176 are arranged. The air-guiding protrusion 174 has a tire radial direction inner portion 174g that guides the air to the inner side in the groove longitudinal direction in the tread surface view on the inner side end in the tire radial direction (end on the groove bottom side). Similarly, the air-guiding protrusion 176 has a tire radial direction inner portion 176g that guides the air to the inner side in the groove longitudinal direction in the tread surface view on the inner side end in the tire radial direction (end on the groove bottom side).

Accordingly, the amount of air fluidized on the surface of the groove bottom increases significantly, so that the groove bottom can be cooled more efficiently compared with the fourth embodiment.

### (Analytical calculation example 1)

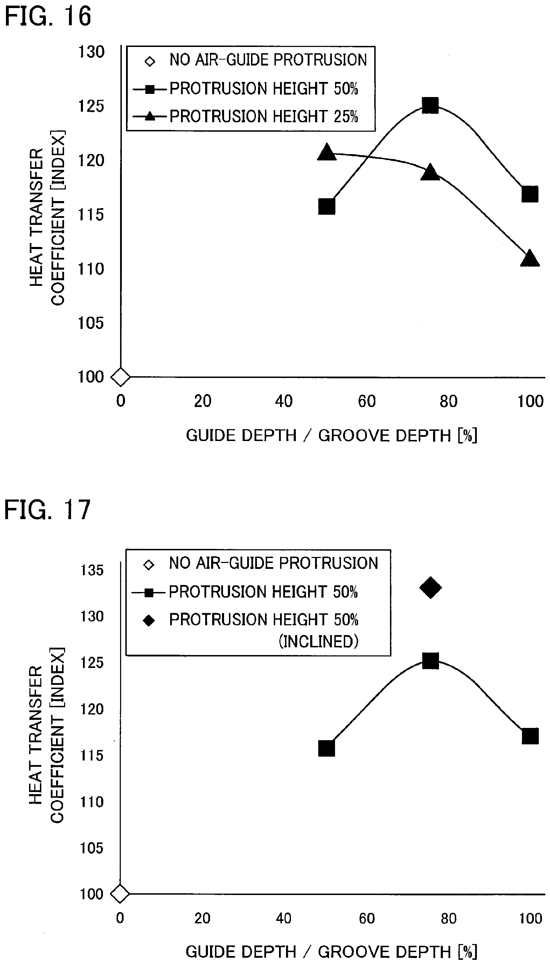

The inventors calculated by analytical calculation the heat transfer coefficient of the entire groove bottom regarding the tire 110 according to the second embodiment by setting the protrusion height HI to 50% of the air intake groove 122 and changing the ratio (50%, 75%, 100%) of the depth E1 in the up and down direction of the air-guiding protrusions 144, 146 to the groove depth D1 of the air intake groove 122 as a parameter. Here, the entire groove bottom means the groove bottom 122c and the average heat transfer coefficient of the region was calculated (this also applies in Analytical calculation example 2). The calculation result is shown in Fig. 16.

Similarly, the heat transfer coefficient was calculated by analytical calculation by setting the protrusion height HI to 25% of the air intake groove 122 and changing the ratio (50%, 75%, 100%) of the guide depth to the depth of the air intake groove as a parameter. The calculation result is shown also in Fig. 16.

As shown in Fig. 13, when the protrusion height HI was set to 50% of the air intake groove 122, a result that the heat transfer coefficient is the highest when the ratio of the depth E1 in the up and down direction of the air-guiding protrusions 144, 146 to the groove depth D1 of the air intake groove 122 is about 75% was obtained.

When the protrusion height H1 was set to 25% of the air intake groove 122, a result that the heat transfer coefficient is the highest when the ratio of the depth E1 in the up and down direction of the air-guiding protrusions 144, 146 to the groove depth D1 of the air intake groove 122 is 50% and gradually decreases with an increasing ratio of the depth E1 in the up and down direction of the air-guiding protrusions 144, 146 to the groove depth D1 of the air intake groove 122 exceeding 50%.

### (Analytical calculation example 2)

The inventors calculated the heat transfer coefficient of the entire groove bottom regarding a tire according to the third embodiment by setting the protrusion height H1 to 50% of the air intake groove 122 and setting the ratio of the depth E1 in the up and down direction of the air-guiding protrusions 154, 156 to the groove depth D1 of the air intake groove to 75%. The calculation result is shown in Fig. 17. In Fig. 17, the analytical calculation result of the heat transfer coefficient regarding the tire 110 according to the second embodiment by setting the protrusion height H1 to 50% of the air intake groove 122 and setting the ratio of the depth E1 in the up and down direction of the air-guiding protrusions 154, 156 to the groove depth D1 of the air intake groove 122 to 75% in Analytical calculation example 1 is also shown for comparison.

When the ratio of the depth E1 in the up and down direction of the air-guiding protrusions 154, 156 to the groove depth D1 of the air intake groove is set to 75%, as is evident from Fig. 17, a result that the heat transfer coefficient is higher in the third embodiment than in the second embodiment was obtained.

### (Analytical calculation example 3)

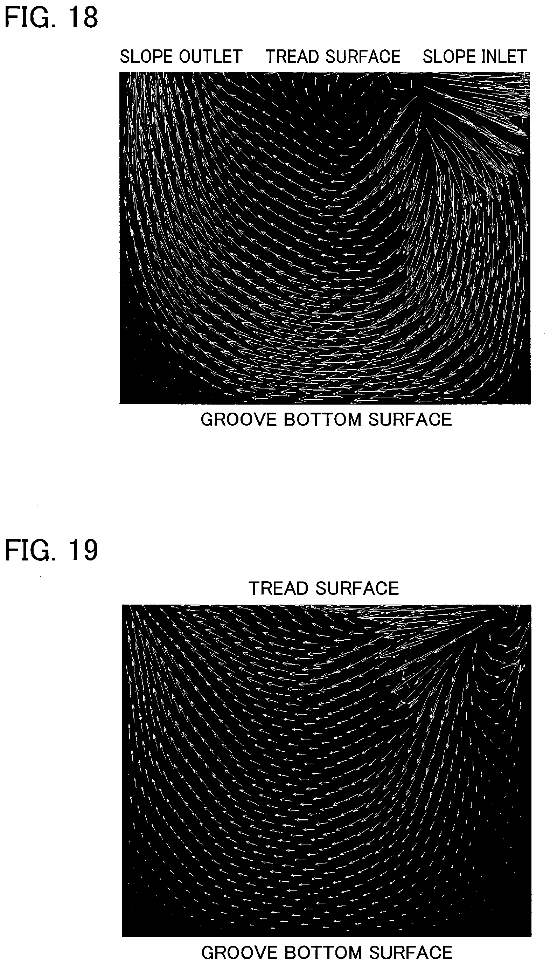

The inventors determined by analytical calculation the air flow on the groove wall surface of the air intake groove 122 using an example of the tire according to the second embodiment. A schematic diagram obtained by the present analytical calculation regarding the air flow on the groove wall surface is shown in Fig. 18.

Similarly, the air flow in the air intake groove 122 communicating with each of both ends thereof was determined by analytical calculation for an example in which the air-guiding protrusion 144 is not formed in a tire according to the second embodiment as an example of a conventional tire. An obtained schematic diagram is shown in Fig. 19.

As is evident from Figs. 18 and 19, we obtained a result that a tire in which the air-guiding protrusions 144, 146 are arranged (Fig. 18, an example of the second embodiment) achieved a better air flow at the groove bottom than a tire in which the air-guiding protrusions 144, 146 are not arranged (Fig. 19, an example of the conventional example).

### (Other embodiments)

In the foregoing, a plurality of embodiments according to the present disclosure has been described, but the present disclosure should not be interpreted by limiting to the above embodiments and can be applied to various embodiments and combinations thereof without deviating from the spirit of the present disclosure. The above embodiments are illustrations to embody technical ideas of the present disclosure and in addition to the combinations of components explicitly demonstrated in the description of each embodiment, if no problem is specifically caused, components of a plurality of embodiments can partially be combined, though not explicitly demonstrated. For example, air-guiding protrusions according to the second to fifth embodiments may be applied to the first embodiment.

In the third to fifth embodiments, the air-guiding protrusions are each arranged by being inclined with respect to the tire radial direction K1 so as to be positioned on the outer side in the groove longitudinal direction of the air intake groove 122 in the tread surface view. When the third to fifth embodiments and the first embodiment are combined, the groove width in the longitudinal direction X of the air intake groove 22 of the air-guiding grooves 26, 30 may decrease with an increasing grove depth.

### Industrial Applicability

The present invention provides a tire capable of sufficiently cooling a deep portion of a tread section by efficiently fluidizing the air in the deep portion of the tread section or the neighborhood thereof.

### Reference Signs List

10, 110 TIRE
12, 112 TREAD PART
20 CENTER LAND SECTION (TREAD)
22, 122 INTAKE GROOVE
22a, 22b, 122a, 122b GROOVE WALL SURFACE OF INTAKE GROOVE
22c, 122c GROOVE BOTTOM OF INTAKE GROOVE
122m AIR INTAKE GROOVE BODY SECTION
122p, 112q AN AIR INTAKE GROOVE SIDE SECTION
24, 124 AIR INTRODUCTION GROOVE
24a, 24b, 124a, 124b GROOVE WALL SURFACE OF INTRODUCTION GROOVE
24c, 124c GROOVE BOTTOM (BOTTOM FACE) OF INTRODUCTION GROOVE
124cb INNER END IN TIRE RADIAL DIRECTION
26 AIR-GUIDING GROOVE (AIR-GUIDING SECTION)
26a GROOVE WALL SURFACE OF AIR-GUIDING GROOVE
26b GROOVE WALL SURFACE (AIR-GUIDING WALL) OF AIR-GUIDING GROOVE
26c GROOVE BOTTOM OF AIR-GUIDING GROOVE
26d, 26eONE END AND OTHER END OF AIR-GUIDING GROOVE
28,128 OTHER AIR INTRODUCTION GROOVE
28a, 28b, 128a, 128b GROOVE WALL SURFACE OF OTHER AIR INTRODUCTION GROOVE
28c, 128c GROOVE BOTTOM (BOTTOM FACE) OF OTHER AIR INTRODUCTION GROOVE
30 OTHER AIR-GUIDING GROOVE
30a GROOVE WALL SURFACE OF OTHER AIR-GUIDING GROOVE
30b GROOVE WALL SURFACE (AIR-GUIDING WALL) OF OTHER AIR-GUIDING GROOVE
30c GROOVE BOTTOM OF OTHER AIR-GUIDING GROOVE
30d, 30eONE END AND OTHER END OF OTHER AIR-GUIDING GROOVE
144, 146,154, 156, 164, 166, 174, 176AIR-GUIDING PROTRUSIONS (AIR-GUIDING SECTIONS)
144b, 146b INNER END IN TIRE RADIAL DIRECTION
144h, 146h OUTER END IN TIRE RADIAL DIRECTION
144f, 146f SIDEWALL
D, D1 GROOVE DEPTH
W, W1 GROOVE WIDTH
HI PROTRUSION HEIGHT

## Claims

1. A tire (10,110) comprising:
at least one air intake groove (22, 122) provided in a tire tread section (12, 112), extending in a direction intersecting a tire circumferential direction, and having a groove width (W, W1) smaller than a groove depth (D, D1);
an air introduction groove (24, 28, 124, 128) opening to a tread surface side and communicating with the air intake groove (22, 122) to introduce an air on the tread surface side into the air intake groove (22, 122) accompanying tire rotation; and
an air-guiding section (26, 30, 144, 146, 154, 156, 164, 166, 174, 176) having an air-guiding surface (26b, 30b, 144f, 146f) which intersects the air intake groove (22, 122) and which is directed outward in a position intersecting the air intake groove (22, 122) with respect to a center position in a groove longitudinal direction of the air intake groove (22, 122), the air-guiding surface (26b, 30b, 144f, 146f) guiding an air (AR) introduced into the air intake groove (22, 122) by the air introduction groove (24, 28, 124, 128) to a groove bottom side of the air intake groove (22, 122),
wherein a groove bottom (24c, 28c) of the air introduction groove (24, 28) is made of an inclined surface inclined from the tread surface toward the inner side in a tire radial direction, the inclination angle (α, α1) of the inclined surface of the air introduction grooves (24, 28), with respect to the tread surface is 45° or less,
wherein the air introduction groove (24, 28) communicates with a groove wall surface (22a, 22b) on one side of groove wall surfaces (22a, 22b) opposite to each other in the tire circumferential direction of the air intake groove (22),
wherein the air-guiding section (26, 30) communicates with the air intake groove (22), communicates with the groove wall surface (22b, 22a) on the other side of the groove wall surfaces (22a, 22b) opposite to each other in the tire circumferential direction of the air intake groove (22), has an outer side end in the tire radial direction on an outer side in a tire radial direction from a radial direction position (P1) where the air introduction groove (24, 28) and the air intake groove (22) intersect, and has an inner side end in the tire radial direction on an inner side in the tire radial direction from a position (P2) half a groove depth (D) of the air intake groove (22), and
wherein the air-guiding section (26, 30) comprises an air-guiding groove (26, 30) partially opposed to the air introduction groove (24, 28) at least in the tire circumferential direction.

2. The tire (10) according to claim 1, wherein the air-guiding groove (26, 30) has a same groove depth (D) as the air intake groove (22) and a groove wall (26c, 30c) of the air-guiding groove (26, 30) is parallel to a sidewall surface (22a, 22b) of the air intake groove (22) at least partially in a radial direction.

3. The tire (10) according to claim 1, wherein one end and the other end (26d and 26e, 30d and 30e) of the air-guiding groove (26, 30) are each positioned between a tread (20) and a groove bottom (22c) of the air intake groove (22) and made of a recess dented with respect to a groove wall (22a, 22b) of the air intake groove (22).

4. The tire (10) according to any one of claims 1 to 3, further comprising: another set of another air introduction groove (28, 24) and another air-guiding groove (30, 26) communicating with the air intake groove (22), wherein the other air introduction groove (28, 24) communicates with the groove wall surface (22b, 22a) on the other side of the groove wall surfaces (22a, 22b) opposite to each other in the circumferential direction of the air intake groove (22) and the air-guiding groove (30, 26) communicates with the groove wall surface (22a, 22b) on the one side in the circumferential direction of the groove wall surfaces (22a, 22b) opposite to each other in the circumferential direction of the air intake groove (22).

5. The tire (10) according to claim 4, wherein a set of the air introduction groove (24, 28) and the air-guiding groove (26, 30) and the other set of the other air introduction groove (28, 24) and the other air-guiding groove (30, 26) are each arranged by being spaced from each other in a longitudinal direction of the air intake groove (22).

6. The tire (10) according to claim 1 or 2, further comprising: another set of another air introduction groove (28, 24) and another air-guiding groove (30, 26) communicating with the air intake groove (22), wherein the other air introduction groove (28, 24) intersects another groove wall surface (22b, 22a) of the air intake groove (22), the other air guiding groove (30, 26) opens to one groove wall surface (22a, 22b) of the air intake groove (22), one end of the air-guiding groove (26, 30) opens to a tread (20), and an aperture ratio (B/A) as a ratio of a sum (B) of orthographic projection areas of the air-guiding groove (26, 30) and the other air-guiding groove (30, 26) to a sum (A) of orthographic projection areas of the air introduction groove (24, 28) and the other air introduction groove (28, 24) on the tread of the tire (10) is 50% or less.

7. The tire (10) according to claim 6, wherein a set of the air introduction groove (24, 28) and the air-guiding groove (26, 30) and the other set of the other air introduction groove (28, 24) and the other air-guiding groove (30, 26) are each arranged by being spaced from each other in a longitudinal direction of the air intake groove (22).

8. The tire (110) according to any one of claims 1 to 7, wherein the air-guiding section (144, 146, 154, 156, 164, 166, 174, 176) protrudes in a groove width (W1) direction of the air intake groove (122) by being arranged on the groove wall of the air intake groove (122) and includes an air-guiding protrusion (144, 146,154, 156, 164, 166, 174, 176) extending in the tire (110) radial direction toward the groove bottom, and the air-guiding protrusion (144, 146,154, 156, 164, 166, 174, 176) guides an air guided into the air intake groove (122) by the air introduction groove (124, 128) accompanying the tire rotation to the groove bottom side of the air intake groove (122).

9. The tire (110) according to claim 8, wherein the air introduction groove (124, 128) and the air-guiding protrusion (144, 146,154, 156, 164, 166, 174, 176) are each arranged on both sides in the groove longitudinal direction with respect to the center position in the groove longitudinal direction of the air intake groove (122) in a tread surface view and the air intake groove (122) comprises an air intake groove body section (122m) positioned on a center side in the groove longitudinal direction from the air-guiding protrusion (144, 146,154, 156, 164, 166, 174, 176) in the tread surface view and an air intake groove side section (122p, 122q) positioned on the outer side in the groove longitudinal direction from the air-guiding protrusion (144, 146,154, 156, 164, 166, 174, 176) to communicate with the air introduction groove (124, 128).

10. The tire (110) according to claim 8 or 9, wherein the inner side end in the tire radial direction of the air-guiding protrusion (144, 146,154, 156, 164, 166, 174, 176) does not reach the groove bottom of the air intake groove (122).

11. The tire (110) according to any one of claims 8 to 10, wherein a protrusion height in the groove width (W1) direction of the air-guiding protrusion (144, 146,154, 156, 164, 166, 174, 176) becomes gradually lower toward to the inner side in the tire radial direction.

12. The tire (110) according to any one of claims 8 to 11, wherein the air-guiding protrusion (156) is inclined to the outer side in the longitudinal direction of the air intake groove (122) in the tread surface view toward the inner side in the tire radial direction.

13. The tire (110) according to any one of claims 8 to 12, wherein the air introduction groove (124, 128) and the air-guiding protrusion (144, 146,154, 156, 164, 166, 174, 176) are arranged so as to be point-symmetric in the tread surface view on both sides in the longitudinal direction of the air intake groove (122).

## Patentansprüche

1. Reifen (10, 110), der Folgendes umfasst:
mindestens eine Lufteinlassrille (22, 122) die in einem Reifenlaufflächenabschnitt (12, 112) bereitgestellt ist, sich in eine Richtung erstreckt, die eine Reifenumfangsrichtung schneidet, und eine Rillenbreite (W, W1) aufweist, die kleiner ist als eine Rillentiefe (D, D1);
eine Lufteinleitungsrille (24, 28, 124, 128), die sich zu einer Laufflächenseite öffnet und mit der Lufteinlassrille (22, 122) kommuniziert, auf der Laufflächenseite eine Luft in die Lufteinlassrille (22, 122) die eine Reifendrehung begleitet, einzuleiten; und
einen Luftführungsabschnitt (26, 30, 144, 146, 154, 156, 164, 166, 174, 176), der eine Luftführungsfläche (26b, 30b, 144f, 146f) aufweist, die die Lufteinlassrille (22, 122) schneidet und die in einer Position, die die Lufteinlassrille (22, 122) schneidet, mit Bezug auf eine Mittenposition in einer Rillenlängsrichtung der Lufteinlassrille (22, 122) nach außen gerichtet ist, wobei die Luftführungsfläche (26b, 30b, 144f, 146f) eine Luft (AR), die von der Lufteinleitungsrille (24, 28, 124, 128) in die Lufteinlassrille (22, 122) eingeleitet wird, zu einer Rillenbodenseite der Lufteinlassrille (22, 122) führt,
wobei ein Rillenboden (24c, 28c) der Lufteinleitungsrille (24, 28) aus einer geneigten Fläche besteht, die in einer Reifenradialrichtung von der Lauffläche zur Innenseite geneigt ist, der Neigungswinkel (α, α1) der geneigten Fläche der Lufteinleitungsrillen (24, 28) mit Bezug auf die Lauffläche 45° oder weniger beträgt,
wobei die Lufteinleitungsrille (24, 28) mit einer Rillenwandfläche (22a, 22b) auf einer Seite von Rillenwandflächen (22a, 22b), die in der Reifenumfangsrichtung der Lufteinlassrille (22) einander gegenüberliegen, kommuniziert,
wobei der Luftführungsabschnitt (26, 30) mit der Lufteinlassrille (22) kommuniziert, mit der Rillenwandfläche (22b, 22a) auf der anderen Seite der Rillenwandflächen (22a, 22b), die in der Reifenumfangsrichtung der Lufteinlassrille (22) einander gegenüberliegen, kommuniziert, in der Reifenradialrichtung auf einer Außenseite in einer Reifenradialrichtung von einer Radialrichtungsposition (P1), wo sich die Lufteinleitungsrille (24, 28) und die Lufteinlassrille (22) schneiden, ein Außenseitenende aufweist und in der Reifenradialrichtung auf einer Innenseite der Reifenradialrichtung von einer Position (P2) einer halben Rillentiefe (D) der Lufteinlassrille (22) ein Innenseitenende aufweist und
wobei der Luftführungsabschnitt (26, 30) teilweise gegenüber der Lufteinleitungsrille (24, 28) mindestens in der Reifenumfangsrichtung eine Luftführungsrille (26, 30) umfasst.

2. Reifen (10) nach Anspruch 1, wobei die Luftführungsrille (26, 30) eine selbe Rillentiefe (D) wie die Lufteinlassrille (22) aufweist und eine Rillenwand (26c, 30c) der Luftführungsrille (26, 30) zu einer Seitenwandfläche (22a, 22b) der Lufteinlassrille (22) mindestens teilweise in eine Radialrichtung parallel verläuft.

3. Reifen (10) nach Anspruch 1, wobei ein Ende und das andere Ende (26d und 26e, 30d und 30e) der Luftführungsrille (26, 30) jeweils zwischen einer Lauffläche (20) und einem Rillenboden (22c) der Lufteinlassrille (22) positioniert sind und aus einer Ausnehmung bestehen, die mit Bezug auf eine Rillenwand (22a, 22b) der Lufteinlassrille (22) eingedrückt ist.

4. Reifen (10) nach einem der Ansprüche 1 bis 3, der ferner Folgendes umfasst: einen weiteren Satz einer weiteren Lufteinleitungsrille (28, 24) und einer weiteren Luftführungsrille (30, 26), die mit der Lufteinlassrille (22) kommunizieren, wobei die weitere Lufteinleitungsrille (28, 24) auf der anderen Seite der Rillenwandflächen (22a, 22b), die in der Umfangsrichtung der Lufteinlassrille (22) einander gegenüberliegen, mit der Rillenwandfläche (22b, 22a) kommuniziert und die Luftführungsrille (30, 26) auf der einen Seite in der Umfangsrichtung der Rillenwandflächen (22a, 22b), die in der Umfangsrichtung der Lufteinlassrille (22) einander gegenüberliegen, mit der Rillenwandfläche (22a, 22b) kommuniziert.

5. Reifen (10) nach Anspruch 4, wobei ein Satz der Lufteinleitungsrille (24, 28) und der Luftführungsrille (26, 30) und der weitere Satz der weiteren Lufteinleitungsrille (28, 24) und der weiteren Luftführungsrille (30, 26) jeweils durch Beabstandetsein voneinander in einer Längsrichtung der Lufteinlassrille (22) angeordnet sind.

6. Reifen (10) nach Anspruch 1 oder 2, der ferner Folgendes umfasst: einen weiteren Satz einer weiteren Lufteinleitungsrille (28, 24) und einer weiteren Luftführungsrille (30, 26), die mit der Lufteinlassrille (22) kommunizieren, wobei die weitere Lufteinleitungsrille (28, 24) eine weitere Rillenwandfläche (22b, 22a) der Lufteinlassrille (22) schneidet, die weitere Luftführungsrille (30, 26) sich zu einer Rillenwandfläche (22a, 22b) der Lufteinlassrille (22) öffnet, ein Ende der Luftführungsrille (26, 30) sich zu einer Lauffläche (20) öffnet und ein Öffnungsverhältnis (B/A) als ein Verhältnis einer Summe (B) von orthografischen Projektionsbereichen der Luftführungsrille (26, 30) und der weiteren Luftführungsrille (30, 26) zu einer Summe (A) der orthografischen Projektionsbereiche der Lufteinleitungsrille (24, 28) und der weiteren Lufteinleitungsrille (28, 24) auf der Lauffläche des Reifens (10) 50 % oder weniger beträgt.

7. Reifen (10) nach Anspruch 6, wobei ein Satz der Lufteinleitungsrille (24, 28) und der Luftführungsrille (26, 30) und der weitere Satz der weiteren Lufteinleitungsrille (28, 24) und der weiteren Luftführungsrille (30, 26) jeweils durch Beabstandetsein voneinander in einer Längsrichtung der Lufteinlassrille (22) angeordnet sind.

8. Reifen (110) nach einem der Ansprüche 1 bis 7, wobei der Luftführungsabschnitt (144, 146, 154, 156, 164, 166, 174, 176) durch Angeordnetsein auf der Rillenwand der Lufteinlassrille (122) in einer Richtung einer Rillenbreite (W1) der Lufteinlassrille (122) vorsteht und einen Luftführungsvorsprung (144, 146, 154, 156, 164, 166, 174, 176) umfasst, der sich in der Radialrichtung des Reifens (110) zum Rillenboden hin erstreckt, und der Luftführungsvorsprung (144, 146, 154, 156, 164, 166, 174, 176) eine Luft, die von der Lufteinleitungsrille (124, 128) in Begleitung der Reifendrehung in die Lufteinlassrille (122) geführt wird, zur Rillenbodenseite der Lufteinlassrille (122) führt.

9. Reifen (110) nach Anspruch 8, wobei die Lufteinleitungsrille (124, 128) und der Luftführungsvorsprung (144, 146, 154, 156, 164, 166, 174, 176) in einer Laufflächendraufsicht mit Bezug auf die Mittenposition in der Rillenlängsrichtung in der Rillenlängsrichtung jeweils auf beiden Seiten der Lufteinlassrille (122) angeordnet sind und die Lufteinlassrille (122) einen Lufteinlassrillenkörperabschnitt (122m), der in der Laufflächendraufsicht in der Rillenlängsrichtung auf einer Mittenseite vom Luftführungsvorsprung (144, 146, 154, 156, 164, 166, 174, 176) positioniert ist, und einen Lufteinleitungsrillenseitenabschnitt (122p, 122q), der in der Rillenlängsrichtung vom Luftführungsvorsprung (144, 146, 154, 156, 164, 166, 174, 176) auf der Außenseite positioniert ist, um mit der Lufteinleitungsrille (124, 128) zu kommunizieren.

10. Reifen (110) nach Anspruch 8 oder 9, wobei das Innenseitenende in der Reifenradialrichtung des Luftführungsvorsprungs (144, 146, 154, 156, 164, 166, 174, 176) den Rillenboden der Lufteinlassrille (122) nicht erreicht.

11. Reifen (110) nach einem der Ansprüche 8 bis 10, wobei eine Vorsprunghöhe in Richtung der Rillenbreite (W1) des Luftführungsvorsprungs (144, 146, 154, 156, 164, 166, 174, 176) in der Reifenradialrichtung zur Innenseite hin allmählich niedriger wird.

12. Reifen (110) nach einem der Ansprüche 8 bis 11, wobei der Luftführungsvorsprung (156) zur Außenseite in der Längsrichtung der Lufteinlassrille (122) in der Laufflächendraufsicht zur Innenseite in der Reifenradialrichtung geneigt ist.

13. Reifen (110) nach einem der Ansprüche 8 bis 12, wobei die Lufteinleitungsrille (124, 128) und der Luftführungsvorsprung (144, 146, 154, 156, 164, 166, 174, 176) derart angeordnet sind, dass sie in der Laufflächendraufsicht in die Längsrichtung der Lufteinlassrille (122) auf beiden Seiten punktsymmetrisch sind.

## Revendications

1. Pneu (10, 110) comprenant :
au moins une cannelure d'admission d'air (22, 122) ménagée dans une section de bande de roulement d'un pneu (12, 112), s'étendant dans une direction coupant une direction circonférentielle du pneu, et présentant une largeur de cannelure (W, W1) inférieure à une profondeur de cannelure (D, D1);
une cannelure d'introduction d'air (24, 28, 124, 128) s'ouvrant sur un côté de surface de bande de roulement et communiquant avec la cannelure d'admission d'air (22, 122) afin d'introduire de l'air sur le côté de surface de bande de roulement dans la cannelure d'admission d'air (22, 122) accompagnant la rotation du pneu ; et
une section de guidage d'air (26, 30, 144, 146, 154, 156, 164, 166, 174, 176) présentant une surface de guidage d'air (26b, 30b, 144f, 146f) qui coupe la cannelure d'admission d'air (22, 122) et qui est dirigée vers l'extérieur dans une position coupant la cannelure d'admission d'air (22, 122) relativement à une position centrale dans une direction longitudinale de cannelure de la cannelure d'admission d'air (22, 122), la surface de guidage d'air (26b, 30b, 144f, 146f) guidant un air (AR) introduit dans la cannelure d'admission d'air (22, 122) par la cannelure d'introduction d'air (24, 28, 124, 128) vers un côté inférieur de cannelure de la cannelure d'admission d'air (22, 122),
dans lequel un fond de cannelure (24c, 28c) de la cannelure d'introduction d'air (24, 28) est constitué d'une surface inclinée, inclinée depuis la surface de bande de roulement vers le côté interne dans une direction radiale du pneu, l'angle d'inclinaison (α, α1) de la surface inclinée des cannelures d'introduction d'air (24, 28), relativement à la surface de bande de roulement est de 45° ou moins,
dans lequel la cannelure d'introduction d'air (24, 28) communique avec une surface de paroi de cannelure (22a, 22b) d'un côté des surfaces de paroi de cannelure (22a, 22b) opposées l'une à l'autre dans la direction circonférentielle du pneu de la cannelure d'admission d'air (22),
dans lequel la section de guidage d'air (26, 30) communique avec la cannelure d'admission d'air (22), communique avec la surface de paroi de cannelure (22a, 22b) de l'autre côté des surfaces de paroi de cannelure (22a, 22b) opposées l'une à l'autre dans la direction circonférentielle du pneu de la cannelure d'admission d'air (22), présente un côté extérieur dans la direction radiale du pneu sur un côté extérieur dans une direction radiale du pneu à partir d'une position de direction radiale (P1) où la cannelure d'introduction d'air (24, 28) et la cannelure d'admission d'air (22) se coupent, et présente une extrémité latérale interne dans la direction radiale du pneu sur un côté interne dans la direction radiale du pneu, depuis une position (P2) à mi-chemin d'une profondeur de cannelure (D) de la cannelure d'admission d'air (22), et
dans lequel la section de guidage d'air (26, 30) comprend une cannelure de guidage d'air (26, 30) partiellement opposée à la cannelure d'introduction d'air (24, 28) au moins dans la direction circonférentielle du pneu.

2. Pneu (10) selon la revendication 1, dans lequel la cannelure de guidage d'air (26, 30) présente une même profondeur de cannelure (D) que la cannelure d'admission d'air (22) et une paroi de cannelure (26c, 30c) de la cannelure de guidage d'air (26, 30) est parallèle à une surface de paroi latérale (22a, 22b) de la cannelure d'admission d'air (22) au moins partiellement dans une direction radiale.

3. Pneu (10) selon la revendication 1, dans lequel une extrémité et l'autre extrémité (26d et 26e, 30d et 30e) de la cannelure de guidage d'air (26, 30) sont chacune positionnées entre une bande de roulement (20) et un fond de cannelure (22c) de la cannelure d'admission d'air (22) et constituées d'une cavité bosselée relativement à une paroi de cannelure (22a, 22b) de la cannelure d'admission d'air (22).

4. Pneu (10) selon l'une quelconque des revendications 1 à 3, comprenant en outre : un autre ensemble d'une autre cannelure d'introduction d'air (28, 24) et une autre cannelure de guidage d'air (30, 26) communiquant avec la cannelure d'admission d'air (22), dans lequel l'autre cannelure d'introduction d'air (28, 24) communique avec la surface de paroi de cannelure (22a, 22b) de l'autre côté des surfaces de paroi de cannelure (22a, 22b) opposées les unes aux autres dans la direction circonférentielle de la cannelure d'admission d'air (22) et la cannelure de guidage d'air (30, 26) communique avec la surface de paroi de cannelure (22a, 22b) d'un côté dans la direction circonférentielle des surfaces de paroi de cannelure (22a, 22b) opposées l'une à l'autre dans la direction circonférentielle de la cannelure d'admission d'air (22).

5. Pneu (10) selon la revendication 4, dans lequel un ensemble de la cannelure d'introduction d'air (28, 24) et de la cannelure de guidage d'air (26, 30) et l'autre ensemble de l'autre cannelure d'introduction d'air (28, 24) et de l'autre cannelure de guidage d'air (30, 26) sont chacun agencés de manière à être espacés l'un de l'autre dans une direction longitudinale de la cannelure d'admission d'air (22).

6. Pneu (10) selon la revendication 1 ou 2, comprenant en outre : un autre ensemble d'une autre cannelure d'introduction d'air (28, 24) et d'une autre cannelure de guidage d'air (30, 26) communiquant avec la cannelure d'admission d'air (22), dans lequel l'autre cannelure d'introduction d'air (28, 24) coupe une autre surface de paroi de cannelure (22b, 22a) de la cannelure d'admission d'air (22), l'autre cannelure de guidage d'air (30, 26) s'ouvre sur une surface de paroi de cannelure (22b, 22a) de la cannelure d'admission d'air (22), une extrémité de la cannelure de guidage d'air (26, 30) s'ouvre sur une bande de roulement (20), et un rapport d'ouverture (B/A) comme un rapport entre une somme (B) de zones de projection orthographiques de la cannelure de guidage d'air (26, 30) et l'autre cannelure de guidage d'air (30, 26) et une somme (A) des zones de projection orthographiques de la cannelure d'introduction d'air (24, 28) et de l'autre cannelure d'introduction d'air (28, 24) sur la bande de roulement du pneu (10) est de 50 % ou moins.

7. Pneu (10) selon la revendication 6, dans lequel un ensemble de la cannelure d'introduction d'air (24, 28) et de la cannelure de guidage d'air (26, 30) et l'autre ensemble de l'autre cannelure d'introduction d'air (28, 24) et de l'autre cannelure de guidage d'air (30, 26) sont chacun agencés en étant espacés l'un de l'autre dans une direction longitudinale de la cannelure d'admission d'air (22).

8. Pneu (110) selon l'une quelconque des revendications 1 à 7, dans lequel la section de guidage d'air (144, 146, 154, 156, 164, 166, 174, 176) ressort dans une direction de la largeur de cannelure (W1) de la cannelure d'admission d'air (122) en étant agencée sur la paroi de cannelure de la cannelure d'admission d'air (122) et elle inclut une saillie de guidage d'air (144, 146, 154, 156, 164, 166, 174, 176) s'étendant dans la direction radiale du pneu (110) vers le fond de cannelure, et la saillie de guidage d'air (144, 146, 154, 156, 164, 166, 174, 176) guide un air guidé dans la cannelure d'admission d'air (122) par la cannelure d'introduction d'air (124, 128) accompagnant la rotation du pneu vers le côté inférieur de cannelure de la cannelure d'admission d'air (122).

9. Pneu (110) selon la revendication 8, dans lequel la cannelure d'introduction d'air (124, 128) et la saillie de guidage d'air (144, 146, 154, 156, 164, 166, 174, 176) sont chacune agencées des deux côtés dans la direction longitudinale de la cannelure relativement à la position centrale dans la direction longitudinale de la cannelure de la cannelure d'admission d'air (122) dans une vue de surface de bande de roulement et la cannelure d'admission d'air (122) comprend une section de corps de cannelure d'admission d'air (122m) positionnée sur un côté central dans la direction longitudinale de la cannelure par rapport à la saillie de guidage d'air (144, 146, 154, 156, 164, 166, 174, 176) dans la vue de la surface de bande de roulement et une section latérale de cannelure d'admission d'air (122p, 122q) positionnée sur le côté extérieur dans la direction longitudinale de cannelure depuis la saillie de guidage d'air (144, 146, 154, 156, 164, 166, 174, 176) afin de communiquer avec la cannelure d'introduction d'air (124, 128).

10. Pneu (110) selon la revendication 8 ou 9, dans lequel l'extrémité latérale interne dans la direction radiale du pneu de la saillie de guidage d'air (144, 146, 154, 156, 164, 166, 174, 176) n'atteint pas le fond de la cannelure de la cannelure d'admission d'air (122).

11. Pneu (110) selon l'une quelconque des revendications 8 à 10, dans lequel une hauteur de saillie dans la direction de la largeur de cannelure (W1) de la saillie de guidage d'air (144, 146, 154, 156, 164, 166, 174, 176) diminue progressivement vers le côté interne dans la direction radiale du pneu.

12. Pneu (110) selon l'une quelconque des revendications 8 à 11, dans lequel la saillie de guidage d'air (156) est inclinée vers le côté extérieur dans la direction longitudinale de la cannelure d'admission d'air (122) dans la vue de surface de bande de roulement vers le côté interne dans la direction radiale du pneu.

13. Pneu (110) selon l'une quelconque des revendications 8 à 12, dans lequel la cannelure d'introduction d'air (124, 128) et la saillie de guidage d'air (144, 146, 154, 156, 164, 166, 174, 176) sont agencées de façon à présenter une symétrie ponctuelle dans la vue de la surface de bande de roulement des deux côtés dans la direction longitudinale de la cannelure d'admission d'air (122).
